# EUROPEAN PATENT APPLICATION

(11) **EP 4 723 798 A1**
(43) Date of publication of application: **08.04.2026**
(21) Application number: 24832540.9
(22) Date of filing: 01.07.2024
(51) Int. Cl.: H04W 76/15, H04W 74/0816, H04W 74/00, H04W 84/12, H04W 74/0808

(54) **LOW-LATENCY COMMUNICATION METHOD AND DEVICE IN WIRELESS LAN SYSTEM**

(30) Priority: 30.06.2023 KR 20230085226; 10.07.2023 KR 20230089353; 11.09.2023 KR 20230120710
(71) Applicant: Hyundai Motor Company, Seoul 06797 (KR); Kia Corporation, Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 22003 (KR); MOON, Ju Seong, Osan-si, Gyeonggi-do 18101 (KR)
(74) Representative: Isarpatent
(86) International application number: PCT/KR2024/009225
(87) International publication number: WO 2025/005764

(57) **Abstract**

A low-latency communication method and apparatus in a WLAN system are provided. A method that is performed by a station (STA) in a WLAN system includes performing at least one of transmission and reception using a first chain on a first link, performing at least one of transmission and reception using a second chain on a second link, receiving an initial frame for starting an enhanced multi-link radio (EMLMR) operation on the first link, switching the second chain from the second link to the first link based on the initial frame, transmitting information for transmission of a data frame on the second link, switching the second chain from the first link to the second link based on the information, receiving a trigger frame on the second link, and transmitting the data frame on the second link based on at least one of the information and the trigger frame.

## Description

### Technical Field

The present invention relates to a wireless local area network (WLAN) system, and more particularly, to a method and apparatus of low latency communication in a WLAN system.

### Background Art

Recently, as the spread of mobile devices expands, a wireless local area network technology capable of providing fast wireless communication services to mobile devices is in the spotlight. The wireless local area network (LAN) technology may be a technology that supports mobile devices such as smart phones, smart pads, laptop computers, portable multimedia players, embedded devices, and the like to wirelessly access the Internet based on wireless communication technology.

As applications requiring higher throughput and applications requiring real-time transmission occur, an expanded frequency bandwidth and/or an efficient retransmitting operation may be supported in a WLAN. In addition, an operation of simultaneously using multiple links or links may be supported.

Meanwhile, the technologies that are described in the Background section are written to improve the understanding of the background of the present disclosure and may include content that is not already known to those of ordinary skill in the art to which the present disclosure belongs.

### Description of Invention

### Technical Problem

The present disclosure is directed to providing a method and apparatus for quickly transmitting data stored in a WLAN terminal during data reception of the WLAN terminal from another WLAN terminal in a WLAN system.

The present disclosure is directed to providing a method and apparatus for quickly transmitting data that is stored in a terminal and requires low latency in a WLAN system.

The present disclosure is directed to providing a method and apparatus of requesting scheduling to transmit data during data reception in a WLAN system.

The present disclosure is directed to providing a method and apparatus for a terminal performing a multi-link radio operation to quickly transmit data requiring low latency in a WLAN system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

According to an embodiment of the present disclosure, a method that is performed by a station (STA) in a WLAN system includes performing at least one of transmission and reception using a first chain on a first link, performing at least one of transmission and reception using a second chain on a second link, receiving an initial frame for starting an enhanced multi-link radio (EMLMR) operation on the first link, switching the second chain from the second link to the first link based on the initial frame, transmitting information for transmission of a data frame on the second link, switching the second chain from the first link to the second link based on the information, receiving a trigger frame on the second link, and transmitting the data frame on the second link based on at least one of the information and the trigger frame.

A method that is performed by an access point (AP) in a WLAN system includes transmitting an initial frame for starting an EMLMR operation on a first link, transmitting information for transmission of a data frame on a second link, receiving information approving use of the second link, and transmitting the data frame on the second link.

According to another embodiment of the present disclosure, a method that is performed by an AP in a WLAN system includes transmitting an initial frame for starting an EMLMR operation on a first link, receiving information for transmission of a data frame on a second link, transmitting a trigger frame on the second link, and receiving the data frame on the second link based on the information.

According to still another embodiment of the present disclosure, a method that is performed by an STA in a WLAN system includes performing at least one of transmission and reception using a first chain on a first link, performing at least one of transmission and reception using a second chain on a second link, receiving an initial frame for starting an EMLMR operation on the first link, switching the second chain of the second link to the first link based on the initial frame, receiving information for transmission of a data frame on the second link, switching the second chain from the first link to the second link based on the information, transmitting information approving use of the second link, and receiving latency-sensitive data on the second link based on the information.

According to yet another embodiment of the present disclosure, an STA in a WLAN system includes a transceiver and a processor coupled to the transceiver, and the processor is configured to: perform at least one of transmission and reception using a first chain on a first link; perform at least one of transmission and reception using a second chain on a second link; receive an initial frame for starting an EMLMR operation on the first link; switch the second chain (radio chain) to the first link based on the initial frame and the first information ; transmit information for transmission of a data frame on the second link; switch the second chain from the first link to the second link based on the information; receive a trigger frame on the second link; and transmit the data frame on the second link based on at least one of the information and the trigger frame.

According to yet another embodiment of the present disclosure, an AP in a WLAN system includes a transceiver and a processor coupled to the transceiver, and the processor is configured to: transmit an initial frame for starting an EMLMR operation on a first link; transmit information for transmission of a data frame on a second link; receive information approving use of the second link; and transmit the data frame on the second link.

### Advantageous Effects

According to the present disclosure, it is possible to provide a WLAN terminal and a communication method that are capable of requesting to share a TXOP obtained by another WLAN terminal so that data requiring low latency is quickly transmitted during communication in a WLAN system.

According to the present disclosure, it is possible to provide a WLAN terminal and a communication method that are capable of quickly transmitting data requiring low latency transmission and thus reducing transmission latency of data in a WLAN system.

According to the present disclosure, it is possible to provide a WLAN terminal and a communication method that are capable of quickly transmitting data using multiple links.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

### Description of the Drawings

FIG. 1 illustrates a block diagram of a communication node in a WLAN system.
FIG. 2 illustrates the concept of multiple links set between multi link devices (MLDs) in a WLAN system.
FIG. 3A illustrates a first embodiment of a WLAN EMLMR low-latency transmission method.
FIG. 3B illustrates a second embodiment of a WLAN EMLMR low-latency transmission method.
FIG. 4A illustrates a third embodiment of a WLAN EMLMR low-latency transmission method.
FIG. 4B illustrates a fourth embodiment of a WLAN EMLMR low-latency transmission method.
FIG. 5A illustrates a fifth embodiment of a WLAN EMLMR low-latency transmission method.
FIG. 5B illustrates a sixth embodiment of a WLAN EMLMR low-latency transmission method.
FIG. 6A illustrates a seventh embodiment of a WLAN EMLMR low-latency transmission method.
FIG. 6B illustrates an eighth embodiment of a WLAN EMLMR low-latency transmission method.
FIG. 7 illustrates a ninth embodiment of a WLAN EMLMR low-latency transmission method.
FIG. 8 illustrates a tenth embodiment of a WLAN EMLMR low-latency transmission method.
FIG. 9 illustrates an eleventh embodiment of a WLAN EMLMR low-latency transmission method.
FIG. 10A illustrates a twelfth embodiment of a WLAN EMLMR low-latency transmission method.
FIG. 10B illustrates a thirteenth embodiment of a WLAN EMLMR low-latency transmission method.
FIG. 11 illustrates a flowchart of a method of operating an STA according to an embodiment of the present disclosure.
FIG. 12 illustrates a flowchart of a method of operating an AP according to an embodiment of the present disclosure.
FIG. 13 illustrates a flowchart of a method of operating an AP according to an embodiment of the present disclosure.
FIG. 14 illustrates a flowchart of a method of operating an STA according to an embodiment of the present disclosure.

### Modes of the Invention

Hereinafter, embodiments of the present disclosure will be described in detail with reference to the accompanying drawings such that those skilled in the art may easily implement the embodiments. However, the present disclosure may be embodied in different forms and is not limited to the embodiments described herein.

In describing the present disclosure, a detailed description of known functions and configurations will be omitted when it may obscure the subject matter of the present disclosure. In addition, in the drawings, a portion that is irrelevant to the description of the present disclosure is omitted, and similar reference numerals refer to similar portions.

In the present disclosure, when a component is "connected", "coupled" or "linked" to another component, it may include not only a direct connection relationship but also an indirect connection relationship in which another component exists in therebetween. In addition, when a component "includes" or "has" other components, it means that other components may be further included rather than excluding other components unless the context clearly indicates otherwise.

In the present disclosure, terms such as first, second, etc. are used only for the purpose of distinguishing one component from other components, and, unless otherwise specified, the order or importance of the components is not limited. Accordingly, within the scope of the present disclosure, a first component in one embodiment may be referred to as a second component in another embodiment, and, similarly, a second component in one embodiment is referred to as a first component in another embodiment.

In the present disclosure, components that are distinguished from each other are intended to clearly describe each of their characteristics, and do not necessarily mean that the components are separated from each other. That is, a plurality of components may be integrated to form one hardware or software unit, or one component may be distributed to form a plurality of hardware or software units. Accordingly, even if not specifically mentioned, such integrated or distributed embodiments are also included in the scope of the present disclosure.

In the present disclosure, components described in various embodiments do not necessarily mean essential components, and some thereof may be optional components. Accordingly, an embodiment composed of a subset of components described in one embodiment is also included in the scope of the present disclosure. In addition, embodiments including other components in addition to components described in various embodiments are also included in the scope of the present disclosure.

In the present disclosure, expressions of positional relationships used herein, such as upper, lower, left, and right, are provided for convenience of description, and in the case where the drawings shown in the present specification are viewed in reverse, the positional relationships described in the specification may be interpreted in reverse.

Hereinafter, a wireless LAN (WLAN) communication system to which the embodiments of the present invention are applied will be described. A WLAN communication system to which the embodiments of the present invention are applied is not limited to the description below, and the embodiments of the present invention may be applied to various WLAN communication systems. A WLAN communication system may be referred to as "a WLAN" or "a WLAN system".

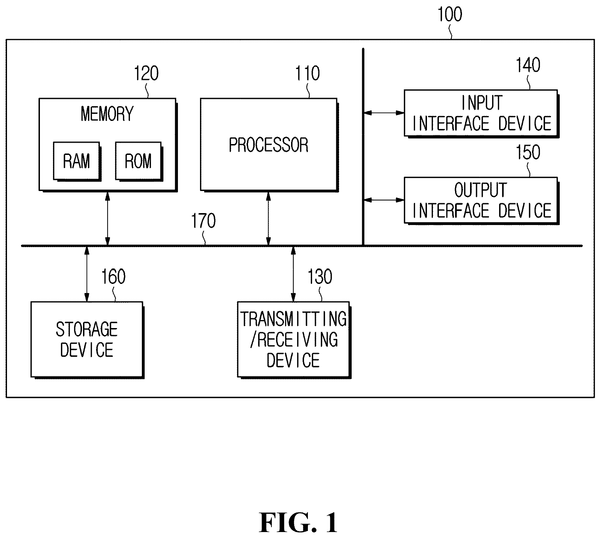

FIG. 1 illustrates a block diagram of a communication node in a WLAN system.

Referring to FIG. 1, a communication node 100 may be an access point (AP), a station (STA), an AP multi-link device (MLD), or a non-AP MLD. A STA may be a non-AP STA. An operating channel width supported by an AP may be 20 MHz, 80 MHz, or 160 MHz. An operating channel width supported by a STA may be 20 MHz or 80 MHz.

The communication node 100 may include at least one processor 110, a memory 120, and at least one transmitting/receiving device 130 that is connected to a network and performs communication. The transmitting/receiving device 130 may also be referred to as a transceiver, a radio frequency (RF) unit, or a RF module. In addition, the communication node 100 may further include an input interface device 140, an output interface device 150, and a storage device 160. Components included in the communication node 100 may be connected by a bus 170 and perform communication between them.

However, each component included in the communication node 100 may be connected not by the common bus 170 but by an individual interface or individual bus around the processor 110. For example, the processor 110 may be connected to at least one of the memory 120, the transmitting/receiving device 130, the input interface device 140, the output interface device 150, and the storage device 160 through a dedicated interface.

The processor 110 may execute a program command stored in at least one of the memory 120 and the storage device 160. The processor 110 may be a central processing unit (CPU), a graphics processing unit (GPU), or a dedicated processor that performs methods according to the embodiments of the present invention. The memory 120 and the storage device 160 may each be formed as at least one of a volatile storage medium and a non-volatile storage medium. For example, the memory 120 may be formed as at least one of a read only memory (ROM) and a random access memory (RAM).

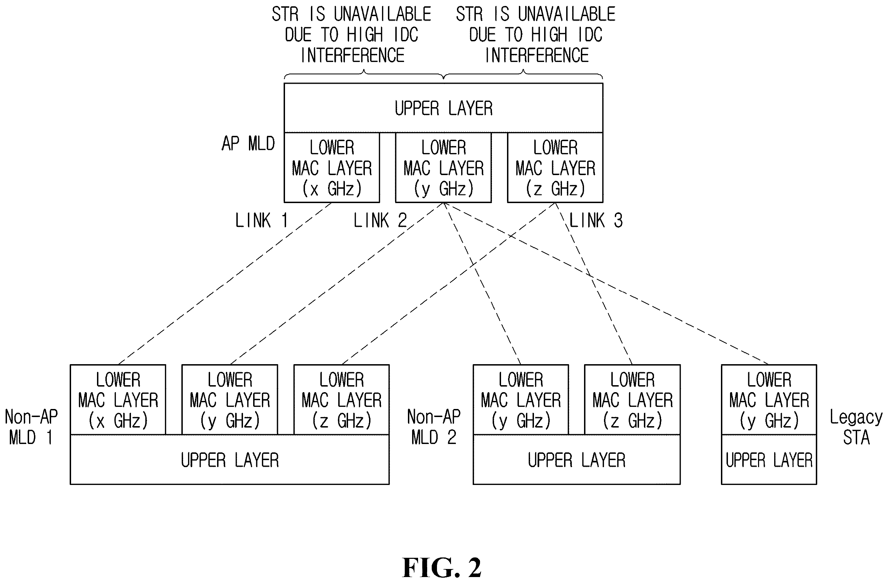

FIG. 2 illustrates the concept of multiple links set between multi link devices (MLDs) in a WLAN system.

Referring to FIG. 2, an MLD may have one medium access control (MAC) address. In embodiments, an MLD may be an AP MLD and/or a non-AP MLD. The MAC address of an MLD may be used in a multi-link setup procedure between a non-AP MLD and an AP MLD. The MAC address of an AP MLD may be different from the MAC address of a non-AP MLD. An Ap(s) associated with an AP MLD may have a different MAC address, and an STA(s) associated with a non-AP MLD may have a different MAC address. APs present in an AP MLD and having different MAC addresses may be in charge of respective links and serve as independent APs.

STAs present in a non- AP MLD and having different MAC addresses may be in charge of respective links and serve as independent STAs. A non-AP MLD may be referred to as a STA MLD. An MLD may support a simultaneous transmit and receive (STR) operation. In this case, the MLD may perform a transmitting operation on Link 1 and a receiving operation on Link 2. An MLD supporting an STR operation may be referred to as an STR MLD (e.g., an STR AP MLD or an STR non-AP MLD). In embodiments, a link may be a channel or a band. A device not supporting an STR operation may be referred to as a non-STR (NSTR) AP MLD or an NSTR non-AP MLD (or NSTR STA MLD).

An MLD may transmit and receive a frame over multiple links using a non-contiguous bandwidth extension scheme (e.g., 80 MHz+80 MHz). A multi-link operation may include multi-band transmission. An AP MLD may include a plurality of APs, and the plurality of APs may operate on different links. A plurality of APs may each perform a function of a lower MAC layer. A plurality of APs may each be referred to as "a communication node" or "a lower entity". A communication node (that is, AP) may operation according to the control of an upper layer (or the processor 110 illustrated in FIG. 1). A non-AP MLD may include a plurality of STAs, and the plurality of STAs may operate on different links. A plurality of STAs may each be referred to as "a communication node" or "a lower entity". A communication node (e.g., STA) may operate according to the control of an upper layer (or the processor 110 illustrated in FIG. 1).

An MLD may perform communication over multiple bands. For example, an MLD may perform communication using a bandwidth of 40 MHz in a band of 2.4 GHz according to a channel expansion scheme (e.g., a bandwidth expansion scheme) and perform communication using a bandwidth of 160 MHz in a band of 5 GHz according to the channel expansion scheme. An MLD may perform communication using the bandwidth of 160 MHz in the band of 5 GHz and perform communication using the bandwidth of 160 MHz in a band of 6 GHz. A single frequency band (e.g., a single channel) used by an MLD may be defined as a single link. Alternatively, a plurality of links may be set in a single frequency band used by an MLD. For example, an MLD may set one link in the band of 2.4 GHz and set two links in the band of 6 GHz. The links may be referred to as a first link, a second link, and a third link respectively. Alternatively, the links may be referred to as Link 1, Link 2, and Link 3 respectively. A link number may be set by an AP, and an identifier (ID) may be assigned to each link.

An MLD (e.g., an AP MLD and/or a non-AP MLD) may set multiple links by performing an access procedure and/or a negotiation procedure for a multi-link operation. In this case, the number of links and/or a link to be used among multiple links may be set. A non-AP MLD (e.g., a STA) may identify information on a band in which communication with an AP MLD is possible. In a negotiation procedure for a multi-link operation between a non-AP MLD and an AP MLD, the non-AP MLD may set one or more links among links supported by the AP MLD to be used for the multi-link operation. A STA (e.g., a STA according to IEEE 802.11a/b/g/n/ac/ax) not supporting the multi-link operation may access one or more links among multiple links supported by an AP MLD.

When a band gap between multiple links (e.g., a band gap between Link 1 and Link 2 in the frequency domain) is sufficient, an MLD may perform an STR operation. For example, the MLD may transmit physical layer convergence procedure (PLCP) protocol data (PPDU) 1 using Link 1 among the multiple links and receive PPDU 2 using Link 2 among the multiple links. On the other hand, when a band gap between multiple links is not sufficient and an MLD performs an STR operation, in-device coexistence (IDC) interference, that is, interference between multiple links may occur. Accordingly, when a band gap between multiple links is not sufficient, an MLD may not perform an STR operation. A pair of links in the above-described interference relationship may be a pair of links limited to non simultaneous transmit and receive (NSTR). Here, an MLD may be an NSTR AP MLD or an NSTR non-AP MLD.

For example, multiple links including Link 1, Link 2, and Link 3 may be set between an AP MLD and a non-AP MLD 1. When a band gap between Link 1 and Link 3 is sufficient, the AP MLD may perform an STR operation using Link 1 and Link 3. That is, the AP MLD may transmit a frame using Link 1 and receive a frame using Link 3. When a band gap between Link 1 and Link 2 is not sufficient, the AP MLD may not perform the STR operation using Link 1 and Link 2. When a band gap between Link 2 and Link 3 is not sufficient, the AP MLD may not perform the STR operation using Link 2 and Link 3.

Meanwhile, in a WLAN system, a negotiation procedure for a multi-link operation may be performed in an access procedure between an STA and an AP.

A device supporting multiple links (e.g., an AP or an STA) may be referred to as a multi-link device (MLD). An AP supporting multiple links may be referred to as an AP MLD, and an STA supporting multiple links may be referred to as a non-AP MLD or an STA MLD. An AP MLD may have a physical address (e.g., an MAC address) for each link. An AP MLD may be implemented as if an AP in charge of each link exists separately. A plurality of APs may be managed in a single AP MLD. Accordingly, coordination may be possible among a plurality of APs that belong to the same AP MLD. An STA MLD may have a physical address (e.g., an MAC address) for each link. An STA MLD may be implemented as if an STA in charge of each link exists separately. A plurality of STAs may be managed in a single STA MLD. Accordingly, coordination may be possible among a plurality of STAs that belong to the same STA MLD.

For example, AP1 of an AP MLD and STA1 of an STA MLD may each be in charge of a first link and perform communication using the first link. AP2 of the AP MLD and STA2 of the STA MLD may each be in charge of a second link and perform communication using the second link. STA2 may receive state change information for the first link on the second link. In this case, the STA MLD may collect information (e.g., state change information) received from each link and control an operation performed by STA1 based on the collected information.

Next, methods for transmitting and receiving data in a wireless LAN system will be described. When a method (e.g., transmission or reception of a signal) performed at a first communication node among communication nodes is described, a second communication node corresponding to it may perform a method (e.g., reception or transmission of a signal) corresponding to the method performed at the first communication node. That is, when an operation of an STA is described, an AP corresponding to it may perform an operation corresponding to the operation of the STA. On the other hand, when an operation of an AP is described, an STA corresponding to it may perform an operation corresponding to the operation of the AP. In an embodiment, an operation of an STA may be interpreted as an operation of an STA MLD, an operation of an STA MLD may be interpreted as an operation of an STA, an operation of an AP may be interpreted as an operation of an AP MLD, and an operation of an AP MLD may be interpreted as an operation of an AP.

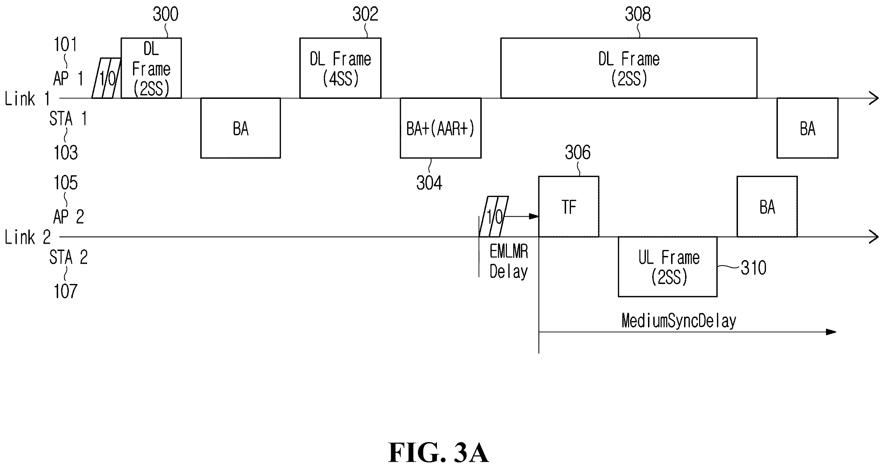

FIG. 3A illustrates a first embodiment of a WLAN EMLMR low-latency transmission method.

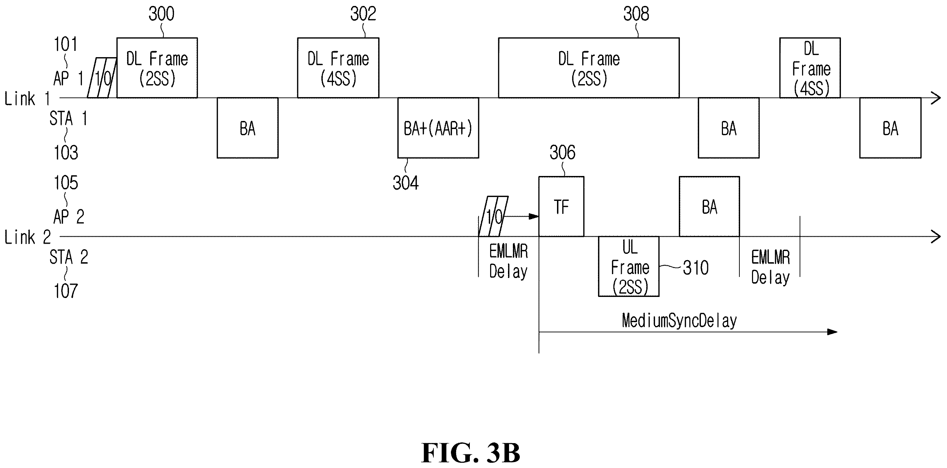

FIG. 3B illustrates a second embodiment of a WLAN EMLMR low-latency transmission method.

Referring to FIG. 3A and 3B, an AP1 101 and an STA1 103 may operate on a first link, and an AP2 105 and an STA2 107 may operate on a second link. The AP1 101 and the AP2 105 may be APs that are affiliated with an AP MLD1. The AP1 103 and the AP2 107 may be APs that are affiliated with an STA MLD1. That is, an AP and an STA that operate on the first link for the AP MLD1 and the STA MLD1 may be the AP1 101 and the STA1 103 respectively, and an AP and an STA that operate on the second link for the AP MLD1 and the STA MLD1 may be the AP2 105 and the STA2 107 respectively.

The STA MLD1 may be an MLD that supports an EMLMR operation. The STA MLD1 may operate the EMLMR operation on the first link and the second link. That is, the first link and the second link may be referred to as an EMLMR link. In the EMLMR operation, an STA MLD having multiple radios first receives an initial frame 300 from an AP via a determined number of spatial streams (NSS) according to per-link spatial stream capabilities on each of multiple links and then switches receive chains and transmit chains to the link on which the initial frame 300 is received. A receive chain and a transmit chain may be referred to as a radio chain. A radio chain may be referred to as a radio module. After receiving the initial frame 300, the STA MLD may communicate with an AP MLD via the switched radio chain using an NSS that is set during an EMLMR setup process. To perform the EMLMR operation, the STA MLD may transmit an enhanced multi-link operating mode notification (EML OMN) frame to the AP MLD. The EML OMN frame may include information on an MCS and an NSS that are to be used in the EMLMR operation. The EML OMN frame is an action frame that includes an EML control field. When frame reception is completed, the STA MLD may switch the radio chain to an EMLMR link on which the initial frame 300 is not received. Until frame reception is completed, the STA MLD cannot receive data on the EMLMR link on which the initial frame 300 is not received. Until frame transmission is completed, the AP MLD does not transmit data on the EMLMR link on which the initial frame 300 is not received. When the STA MLD performs the EMLMR operation on an EMLMR link and intends to transmit a frame to the AP MLD, an STA of the STA MLD may switch a radio chain and transmit the frame to an AP of the AP MLD using an MCS and an NSS that are to be used for the EMLMR operation. When the STA of the STA MLD completes the frame transmission, the STA MLD may operate on each of multiple links according to per-link spatial stream capabilities. When the STA of the STA MLD transmits a frame to the AP of the AP MLD, the AP MLD may transmit a frame to other STA then the STA that performs transmission for the STA MLD.

On the first link, the AP1 101 may perform a channel access procedure to transmit a frame to the STA1 103. The channel access procedure may be an EDCA backoff procedure. When the EDCA backoff procedure is successful, the AP1 101 obtains a TXOP that is a period during which multiple frames may be transmitted. That is, the AP1 101 is a TXOP holder. The AP1 101 may transmit the initial frame 300 to the STA1 103. The per-link spatial stream capability of the STA1 103 may be NSS=2. Accordingly, the AP1 101 may transmit a frame to the STA1 103 using two spatial streams. The STA 1 103 may respond to the frame of the AP1 101 using a BlockAck (BA) frame. The STA MLD1 may switch a radio chain to the first link after receiving the initial frame 300 of the AP1 101. The STA MLD1 may perform transmission and reception in the EMLMR operation through four spatial streams. In other words, the spatial stream capability that is exchanged in an EML OMN frame and is used for the EMLMR operation may be NSS=4. Accordingly, after the STA MLD1 switches the radio chain to the first link, the STA1 103 may transmit or receive a frame using four spatial streams. The AP1 101 may transmit a data frame 302 to the STA1 103 using four spatial streams. The STA2 107 cannot perform frame transmission. While the STA MLD1 receives the data frame 302 on the first link, data for STA MLD1 to transmit on the second link may arise. The data to be transmitted on the second link may be data that needs to be quickly transmitted. Accordingly, the STA1 103 of the STA MLD1 may indicate, in a BA frame 304 transmitted to AP1 101, a request to transmit and receive frames on another EMLMR link on which the STA MLD1 is not currently receiving. This request may be referred to as EMLMR rapid transmission request information. The EMLMR rapid transmission request information may include at least one of the following information: a link bitmap, trigger frame request information, MCS-NSS information to be used on an indicated link, MCS-NSS information to be used on a current link, and delay bound information. The link bitmap may indicate a link that the STA MLD1 intends to further use. For example, the STA MLD1 may indicate the second link. The trigger frame request information is information requesting that a trigger frame 306 is required on the link that STA MLD 1 indicates in the link bitmap. For example, since the STA MLD1 indicates the second link in the link bitmap, the AP2 105 of the AP MLD1 may transmit a trigger frame to the STA2 107 of the STA MLD1 on the second link. The MCS-NSS information to be used on an indicated link indicates MCS and NSS information that is supported on a link that the STA MLD1 indicates in the link bitmap. The STA MLD1 and the AP MLD1 perform communication according to the MCS-NSS information on a link that the STA MLD1 indicates in the link bitmap. The MCS-NSS information to be used on a current link indicates MCS and NSS information that is supported on a link on which the initial frame 300 is exchanged. The STA MLD1 and the AP MLD1 perform communication according to the MCS-NSS information on the link on which the initial frame 300 is exchanged. In another method, the STA MLD1 and the AP MLD1 may operate according to per-link spatial stream capability. The delay bound information is information indicating by when the STA MLD1 must transmit data to the AP MLD1. For example, when an STA specifies the delay bound information as 1 ms, this indicates that the STA wishes to share an TXOP from an TXOP holder within 1 ms. The delay bound information may further include per AC or per TID time information. For example, the STA may indicate the delay bound information for each AC such as 1 ms for AC_VO and 5 ms for AC_BE. Alternatively, the STA may indicate the delay bound information for each TID such as 1 ms for TID 1 and 3 ms for TID 3. An indication of the delay bound information for each AC and an indication of the delay bound information for each TID may be used concurrently. According to delay bound information, the AP MLD1 may change a channel access parameter (e.g., an EDCA parameter) that is used to transmit a trigger frame or a downlink frame on a link that the STA MLD1 indicates in the link bitmap. The EMLMR rapid transmission request information that the STA1 103 transmits to the AP1 101 may be included in an MAC header of a QoS Null frame in the form of A-Control and may be transmitted in an A-MPDU form aggregated with a BA frame. The EMLMR rapid transmission request information may be assisted AP request+ (AAR+) information that is extended AAR information. In another method, the EMLMR rapid transmission request information may be information that is configured in the form of A-Control or may be included in a frame transmitted by the STA 1 103 to the AP 1 101 in the form of an indication bit, a subfield, or an information element, or in any other forms.

The ST1 103 may transmit an EMLMR rapid transmission request to the AP1 101, which may request transmission of the trigger frame 306 on the second link. After receiving the BA frame 304 including the EMLMR rapid transmission request information transmitted by the STA1 103, the AP1 101 of the AP MLD1 may include an indicator confirming the use of the second link in a downlink frame 308. The indicator confirming the use of the second link may indicate whether the STA2 107 and the AP2 105 can communicate on the second link. The indicator confirming the use of the second link may be configured in at least one form of an A-Control field included in an MAC header or MAC data frame, a subfield, an indication bit, and an information element. Alternatively, the indicator confirming the use of the second link may be indicated by a PHY preamble. For example, the indicator confirming the use of the second link may be indicated by a change in an NSS that is a number of spatial streams by which a PPDU is transmitted (e.g., a decrease of the NSS compared to a previous frame reception), and the change in the NSS may be informed through the PHY preamble. Alternatively, the indicator confirming the use of the second link may be indicated based on a change in an NSS and MCS field value of a user field of an extremely high throughput (EHT)-SIG or ultra high reliability (UHR)-SIG that is included in the PHY preamble. The AP2 105 of the AP MLD1 may perform a channel access procedure (e.g., an EDCA backoff operation) and transmit a trigger frame 306 to the STA2 107 when a backoff counter reaches zero. The channel access procedure of the AP2 105 may be performed more quickly based on the delay bound information of the EMLMR rapid transmission request information that the STA1 103 transmits to the AP1 101. Alternatively, even when the backoff counter reaches zero, if EMLMR Delay has not elapsed since the transmission end time of the BA frame 304 including the EMLMR rapid transmission request of the STA1 103, the AP2 105 may not transmit the trigger frame 306 but maintain the backoff counter at zero. When the EMLMR Delay has elapsed, the AP2 105 may transmit the trigger frame 306 to the STA2 107. The EMLMR Delay is a time required for an STA MLD performing an EMLMR operation to switch a radio chain. Since the STA2 107 does not detect a channel for at least a predetermined time on the second link, the STA2 107 may set a MediumSyncDelay timer on the second link. The length of the MediumSyncDelay timer may be set to a preset value, for example, aPPDUMaxTime that is a greatest length of PPDU, and while the MediumSyncDelay timer operates, the STA2 107 needs to perform clear channel assessment (CCA) to determine whether a channel is occupied. CCA is a channel detecting operation. When the STA2 107 receives the trigger frame 306 of the AP2 105, the MediumSyncDelay timer is initialized, and frame transmission and reception may be performed. The trigger frame 306 that the AP2 105 transmits to the STA2 107 may indicate the length of a resource according to the EMLMR rapid transmission request information that the STA1 103 transmits to the AP1 101. The STA2 107 may transmit a frame 310 requiring rapid transmission to the AP2 105. On the first link, the AP1 101 and the STA1 103 may transmit and receive the frame 310 using two spatial streams according to the EMLMR rapid transmission request indicated by the STA1 103. On the second link, the AP2 105 and the STA2 107 may transmit and receive the frame 310 using two spatial streams according to the EMLMR rapid transmission request indicated by the STA1 103.

Referring to FIG. 3B, when the EMLMR Delay time has elapsed after a duration of aSIFSTime + aSlotTime + aRxPHYStartDelay since the communication of the AP2 105 and the STA2 107 on the second link ends, the AP1 101 and the STA1 103 on the first link may perform a communication operation according to the spatiotemporal stream capability for the EMLMR operation that is exchanged through the EML OMN frame on the first link. For example, the AP1 101 and the STA1 103 may perform an operation of transmitting and receiving a frame using four spatial streams.

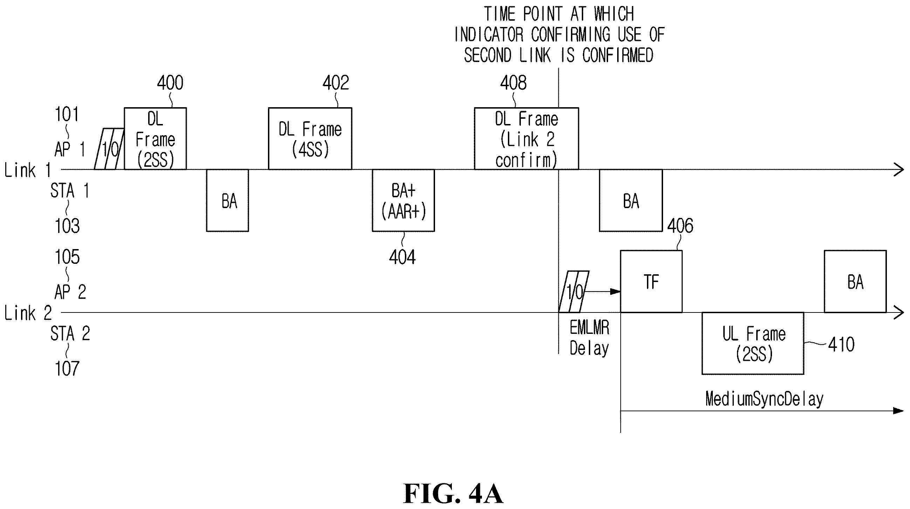

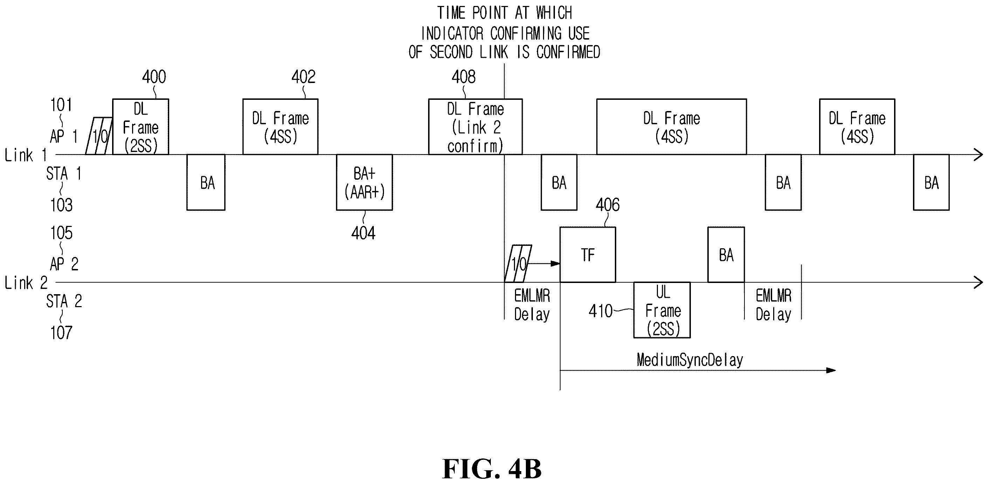

FIG. 4A and FIG. 4B are timing diagrams illustrating a third embodiment and a fourth embodiment of a WLAN EMLMR low-latency transmission method.

Referring to FIG. 4A and 4B, the AP1 101 and the STA1 103 may operate on a first link, and the AP2 105 and the STA2 107 may operate on a second link. The AP1 101 and the AP2 105 may be APs that are affiliated with an AP MLD1. The AP1 103 and the AP2 107 may be APs that are affiliated with an STA MLD1. That is, an AP and an STA that operate on the first link for the AP MLD1 and the STA MLD1 may be the AP1 101 and the STA1 103 respectively, and an AP and an STA that operate on the second link for the AP MLD1 and the STA MLD1 may be the AP2 105 and the STA2 107 respectively.

The STA MLD1 may be an MLD that supports an EMLMR operation. The STA MLD1 may operate the EMLMR operation on the first link and the second link. That is, the first link and the second link may be referred to as an EMLMR link. In the EMLMR operation, an STA MLD having multiple radios first receives an initial frame 400 from an AP via a determined number of spatial streams (NSS) according to per-link spatial stream capabilities on each of multiple links and then switches receive chains and transmit chains to the link on which the initial frame 400 is received. A receive chain and a transmit chain may be referred to as a radio chain. After receiving the initial frame 400, the STA MLD may communicate with an AP MLD via the switched radio chain using an NSS that is set during an EMLMR setup process. To perform the EMLMR operation, the STA MLD may transmit an enhanced multi-link operating mode notification (EML OMN) frame to the AP MLD. The EML OMN frame may include information on an MCS and an NSS that are to be used in the EMLMR operation. The EML OMN frame is an action frame that includes an EML control field. When frame reception is completed, the STA MLD may switch the radio chain to an EMLMR link on which the initial frame 400 is not received. Until frame reception is completed, the STA MLD cannot receive data on the EMLMR link on which the initial frame 400 is not received. Until frame transmission is completed, the AP MLD does not perform transmission on the EMLMR link on which the initial frame 400 is not received. When the STA MLD performs the EMLMR operation on an EMLMR link and intends to transmit a frame to the AP MLD, an STA of the STA MLD may switch a radio chain and transmit the frame to an AP of the AP MLD using an MCS and an NSS that are to be used for the EMLMR operation. When the STA of the STA MLD completes the frame transmission, the STA MLD may operate on each of multiple links according to per-link spatial stream capabilities. When the STA of the STA MLD transmits a frame to the AP of the AP MLD, the AP MLD may transmit a frame to other STA then the STA that performs transmission for the STA MLD.

On the first link, the AP1 101 may perform a channel access procedure to transmit a frame to the STA1 103. The channel access procedure may be an EDCA backoff procedure. When the EDCA backoff procedure is successful, the AP1 101 obtains a TXOP that is a period during which multiple frames may be transmitted. That is, the AP1 101 is a TXOP holder. The AP1 101 may transmit the initial frame 400 to the STA1 103. The per-link spatial stream capability of the STA1 103 may be NSS=2. Accordingly, the AP1 101 may transmit a frame to the STA1 103 using two spatial streams. The STA 1 103 may respond to the frame of the AP1 101 using a BlockAck (BA) frame. The STA MLD1 may switch a radio chain to the first link after receiving the initial frame 400 of the AP1 101. The STA MLD1 may perform transmission and reception in the EMLMR operation through four spatial streams. In other words, the spatial stream capability that is exchanged in an EML OMN frame and is used for the EMLMR operation may be NSS=4. Accordingly, after the STA MLD1 switches the radio chain to the first link, the STA1 103 may transmit or receive a frame using four spatial streams. The AP1 101 may transmit a data frame 402 to the STA1 103 using four spatial streams. The STA2 107 cannot perform frame transmission. While the STA MLD1 receives the data frame on the first link, data for STA MLD1 to transmit on the second link may arise. The data to be transmitted on the second link may be data that needs to be quickly transmitted. Accordingly, the STA1 103 of the STA MLD1 may indicate, in a BA frame 404 transmitted to AP1 101, a request to transmit and receive frames on another EMLMR link on which the STA MLD1 is not currently receiving. This request may be referred to as EMLMR rapid transmission request information. The EMLMR rapid transmission request information may include at least one of the following information: a link bitmap, trigger frame request information, MCS-NSS information to be used on an indicated link, MCS-NSS information to be used on a current link, and delay bound information. The link bitmap may indicate a link that the STA MLD1 intends to further use. For example, the STA MLD1 may indicate the second link. The trigger frame request information is information requesting that a trigger frame 406 is required on the link that STA MLD 1 indicates in the link bitmap. For example, since the STA MLD1 indicates the second link in the link bitmap, the AP2 105 of the AP MLD1 may transmit the trigger frame 406 to the STA2 107 of the STA MLD1 on the second link. The MCS-NSS information to be used on an indicated link indicates MCS and NSS information that is supported on a link that the STA MLD1 indicates in the link bitmap. The STA MLD1 and the AP MLD1 perform communication according to the MCS-NSS information on a link that the STA MLD1 indicates in the link bitmap. The MCS-NSS information to be used on a current link indicates MCS and NSS information that is supported on a link on which the initial frame 400 is exchanged. The STA MLD1 and the AP MLD1 perform communication according to the MCS-NSS information on the link on which the initial frame 400 is exchanged. In another method, the STA MLD1 and the AP MLD1 may operate according to per-link spatial stream capability. The delay bound information is information indicating by when the STA MLD1 must transmit data to the AP MLD1. For example, when an STA specifies the delay bound information as 1 ms, this indicates that the STA wishes to share an TXOP from an TXOP holder within 1 ms. The delay bound information may further include per AC or per TID time information. For example, the STA may indicate the delay bound information for each AC such as 1 ms for AC_VO and 5 ms for AC_BE. Alternatively, the STA may indicate the delay bound information for each TID such as 1 ms for TID 1 and 3 ms for TID 3. An indication of the delay bound information for each AC and an indication of the delay bound information for each TID may be used concurrently. According to delay bound information, the AP MLD1 may change a channel access parameter (e.g., an EDCA parameter) that is used to transmit the trigger frame 406 or a downlink frame on a link that the STA MLD1 indicates in the link bitmap. The EMLMR rapid transmission request information that the STA1 103 transmits to the AP1 101 may be included in an MAC header of a QoS Null frame in the form of A-Control and may be transmitted in an A-MPDU form aggregated with a BA frame. The EMLMR rapid transmission request information may be assisted AP request+ (AAR+) information that is extended AAR information. In another method, the EMLMR rapid transmission request information may be information that is configured in the form of A-Control or may be included in a frame transmitted by the STA 1 103 to the AP 1 101 in the form of an indication bit, a subfield, or an information element, or in any other forms.

The ST1 103 may transmit an EMLMR rapid transmission request to the AP1 101, which may request transmission of the trigger frame 406 on the second link. After receiving the BA frame 404 including the EMLMR rapid transmission request information transmitted by the STA1 103, the AP1 101 of the AP MLD1 may include an indicator confirming the use of the second link in a downlink frame 408. The indicator confirming the use of the second link may indicate whether the STA2 107 and the AP2 105 can communicate on the second link. The indicator confirming the use of the second link may be configured in at least one form of an A-Control field included in an MAC header or MAC data frame, a subfield, an indication bit, and an information element. Alternatively, the indicator confirming the use of the second link may be indicated by a PHY preamble. For example, the indicator confirming the use of the second link may be indicated by a change in an NSS that is a number of spatial streams by which a PPDU is transmitted (e.g., a decrease of the NSS compared to a previous frame reception), and the change in the NSS may be informed through the PHY preamble. Alternatively, the indicator confirming the use of the second link may be indicated based on a change in an NSS and MCS field value of a user field of an extremely high throughput (EHT)-SIG or ultra high reliability (UHR)-SIG that is included in the PHY preamble. For example, the downlink frame 402 that the AP1 101 of the AP MLD1 transmits before receiving rapid transmission request information of the STA MLD1 may have an NSS of 4 (that is, an NSS used for an EMLMR operation), but when an indicator confirming that the AP MLD1 uses the second link confirms that the STA MLD1 uses the second link, the NSS of the downlink frame 408 that the AP1 101 of the AP MLD1 transmits after receiving the rapid transmission request information of the STA MLD1 may decrease from 4 (e.g., from 4 to 2). That is, the downlink frame 408 may be decreased to be within a per-link spatial stream capability and then be transmitted. When the indicator confirming that the AP MLD1 uses the second link does not confirm that the STA MLD1 uses the second link, the NSS of a third downlink frame that the AP1 101 of the AP MLD1 transmits may not be decreased but be remained at 4. When the second link requested by the STA MLD1 is busy, the AP MLD1 does not confirm the use of the second link by the STA MLD1. Alternatively, the AP MLD1 may not confirm the use of the second link when at least one or more of MCS-NSS information requested by the STA MLD1 (e.g., MCS-NSS information to be used on a current link and MCS-NSS information to be used on an indicated link), delay bound, and trigger frame request information is satisfied.

The STA MLD1 checks an indicator confirming the use of the second link by the AP MLD1. When the AP MLD1 does not confirm the use of the second link, the STA MLD1 continuously performs communication on the first link. When the AP MLD1 confirms the use of the second link, the STA MLD 1 operates based on MCS-NSS information (e.g., MCS-NSS information to be used on a current link and MCS-NSS information to be used on an indicated link) requested by the AP1 101 on the first link and the second link. The STA MLD1 may not immediately operate based on MCS-NSS information to be used on an indicated link or a per-link spatial stream capability on the second link. For example, the STA2 107 of the STA MLD1 may be able to operate after the EMLMR delay has elapsed which begins from a time point of confirming an indicator confirming the use of the second link (e.g., a time point at which the STA1 103 of the STA MLD1 first decodes an MAC header and/or MAC frame body included in a frame transmitted by the AP1 101 of the AP MLD 1, or a time point at which the STA 1 103 of STA MLD 1 decodes a PHY preamble of the frame 408 transmitted by AP1 101 and confirms the NSS). When the indicator confirming the use of the second link is indicated in the form of a PHY preamble, an operation of the STA1 103 of the STA MLD1 decoding the PHY preamble of the frame 408 transmitted by the AP1 101 and confirming the NSS may be performed as follows. A PHY layer of the STA1 103 decodes the PHY preamble included in the frame 408 of the AP1 101. The PHY layer identifies the NSS of the frame 408 transmitted by the AP1 101 based on the preamble and generates a primitive (e.g., PHY-RXSTART.indication primitive including RXVECTOR information). The RXVECTOR information is physical layer information that indicates an NSS directly or indirectly. The PHY layer of the STA1 103 transmits a PHY primitive to an MAC layer of the STA1 103 (that is, an MLD lower MAC sublayer). The MAC layer of the STA1 103 may identify the NSS of the frame 408 transmitted by the AP1 101. Alternatively, instead of identifying the NSS, the MAC layer of the STA1 103 may transmit PHY primitive information to the MAC layer of the STA MLD1 (that is, an MLD upper MAC sublayer), and the MAC layer of the STA MLD1 may identify the NSS.

After the AP1 of the AP MLD1 transmits an indicator confirming the use of the second link, or after the AP1 101 receives the EMLMR rapid transmission request information of the STA1 103, the AP2 105 of the AP MLD1 may perform a channel access procedure (e.g., an EDCA backoff operation) and transmit the trigger frame 406 to the STA2 107 when a backoff counter reaches zero. The channel access procedure of the AP2 105 may be performed more quickly based on the delay bound information of the EMLMR rapid transmission request information that the STA1 103 transmits to the AP1 101. Alternatively, even when the backoff counter reaches zero, if EMLMR Delay has not elapsed since a time point at which the indicator confirming the use of the second link is first confirmed, the AP2 105 may not transmit the trigger frame 406 but maintain the backoff counter at zero. When the EMLMR Delay has elapsed since the time point at which the indicator confirming the use of the second link is first confirmed, the AP2 105 may transmit the trigger frame 406 to the STA2 107. The EMLMR Delay is a time required for an STA MLD performing an EMLMR operation to switch a radio chain. Since the STA2 107 does not detect a channel for at least a predetermined time on the second link, the STA2 107 may set a MediumSyncDelay timer on the second link. The length of the MediumSyncDelay timer may be set to a preset value, for example, aPPDUMaxTime that is a greatest length of PPDU, and while the MediumSyncDelay timer operates, the STA2 107 needs to perform clear channel assessment (CCA) to determine whether a channel is occupied. CCA is a channel detecting operation. When the STA2 107 receives the trigger frame 406 of the AP2 105, the MediumSyncDelay timer is initialized, and frame transmission and reception may be performed. The trigger frame 406 that the AP2 105 transmits to the STA2 107 may indicate the length of a resource according to the EMLMR rapid transmission request information that the STA1 103 transmits to the AP1 101. The STA2 107 may transmit a frame 410 requiring rapid transmission to the AP2 105. On the first link, the AP1 101 and the STA1 103 may transmit and receive the frame 410 using two spatial streams according to the EMLMR rapid transmission request indicated by the STA1 103. On the second link, the AP2 105 and the STA2 107 may transmit and receive the frame 410 using two spatial streams according to the EMLMR rapid transmission request indicated by the STA1 103.

Referring to FIG. 4B, when the EMLMR Delay time has elapsed after a duration of aSIFSTime + aSlotTime + aRxPHYStartDelay since the communication of the AP2 105 and the STA2 107 on the second link ends, the AP1 101 and the STA1 103 on the first link may perform a communication operation according to the spatiotemporal stream capability for the EMLMR operation that is exchanged through the EML OMN frame on the first link. For example, the AP1 101 and the STA1 103 may perform an operation of transmitting and receiving a frame using four spatial streams.

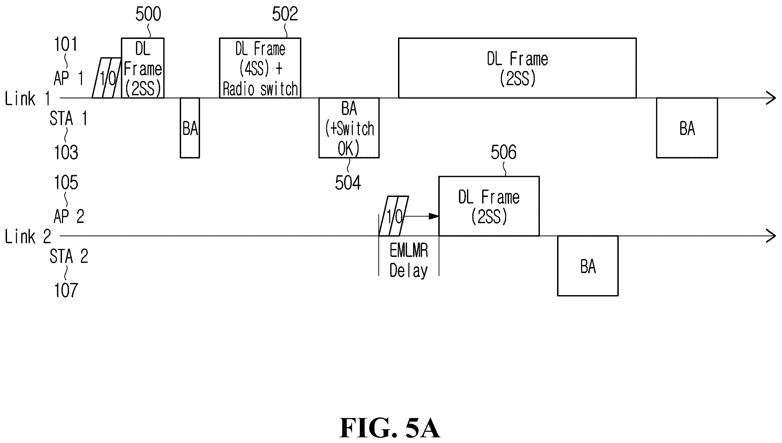

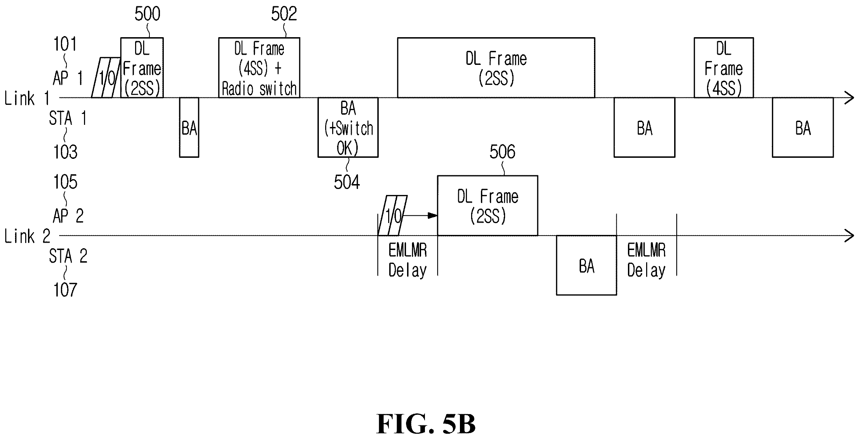

FIG. 5A and FIG. 5B are timing diagrams illustrating a fifth embodiment and a sixth embodiment of a WLAN EMLMR low-latency transmission method.

Referring to FIG. 5A and 5B, the AP1 101 and the STA1 103 may operate on a first link, and the AP2 105 and the STA2 107 may operate on a second link. The AP1 101 and the AP2 105 may be APs that are affiliated with an AP MLD1. The AP1 103 and the AP2 107 may be APs that are affiliated with an STA MLD1. That is, an AP and an STA that operate on the first link for the AP MLD1 and the STA MLD1 may be the AP1 101 and the STA1 103 respectively, and an AP and an STA that operate on the second link for the AP MLD1 and the STA MLD1 may be the AP2 105 and the STA2 107 respectively.

The STA MLD1 may be an MLD that supports an EMLMR operation. The STA MLD1 may operate the EMLMR operation on the first link and the second link. That is, the first link and the second link may be referred to as an EMLMR link. In the EMLMR operation, an STA MLD having multiple radios first receives an initial frame 500 from an AP via a determined number of spatial streams (NSS) according to per-link spatial stream capabilities on each of multiple links and then switches receive chains and transmit chains to the link on which the initial frame 500 is received. A receive chain and a transmit chain may be referred to as a radio chain. After receiving the initial frame 500, the STA MLD may communicate with an AP MLD via the switched radio chain using an NSS that is set during an EMLMR setup process. To perform the EMLMR operation, the STA MLD may transmit an enhanced multi-link operating mode notification (EML OMN) frame to the AP MLD. The EML OMN frame may include information on an MCS and an NSS that are to be used in the EMLMR operation. The EML OMN frame is an action frame that includes an EML control field. When frame reception is completed, the STA MLD may switch the radio chain to an EMLMR link on which the initial frame 500 is not received. Until frame reception is completed, the STA MLD cannot receive data on the EMLMR link on which the initial frame 500 is not received. Until frame transmission is completed, the AP MLD does not perform transmission on the EMLMR link on which the initial frame 500 is not received. When the STA MLD performs the EMLMR operation on an EMLMR link and intends to transmit a frame to the AP MLD, an STA of the STA MLD may switch a radio chain and transmit the frame to an AP of the AP MLD using an MCS and an NSS that are to be used for the EMLMR operation. When the STA of the STA MLD completes the frame transmission, the STA MLD may operate on each of multiple links according to per-link spatial stream capabilities. When the STA of the STA MLD transmits a frame to the AP of the AP MLD, the AP MLD may transmit a frame to other STA then the STA that performs transmission for the STA MLD.

On the first link, the AP1 101 may perform a channel access procedure to transmit a frame to the STA1 103. The channel access procedure may be an EDCA backoff procedure. When the EDCA backoff procedure is successful, the AP1 101 obtains a TXOP that is a period during which multiple frames may be transmitted. That is, the AP1 101 is a TXOP holder. The AP1 101 may transmit the initial frame 500 to the STA1 103. The per-link spatial stream capability of the STA1 103 may be NSS=2. Accordingly, the AP1 101 may transmit a frame to the STA1 103 using two spatial streams. The STA 1 103 may respond to the frame of the AP1 101 using a BlockAck (BA) frame. The STA MLD1 may switch a radio chain to the first link after receiving the initial frame 500 of the AP1 101. The STA MLD1 may perform transmission and reception in the EMLMR operation through four spatial streams. In other words, the spatial stream capability that is exchanged in an EML OMN frame and is used for the EMLMR operation may be NSS=4. Accordingly, after the STA MLD1 switches the radio chain to the first link, the STA1 103 may transmit or receive a frame using four spatial streams. The AP1 101 may transmit a data frame 502 to the STA1 103 using four spatial streams. The STA2 107 cannot perform frame transmission. The AP2 105 does not perform frame transmission to the STA2 107. While the AP MLD1 performs frame transmission on the first link, data to be transmitted to the STA2 107 on the second link may arise. The data to be transmitted on the second link may be data that needs to be quickly transmitted. Accordingly, the AP1 101 of the AP MLD1 may indicate, in a data frame 502 transmitted to the STA1 103, a request to receive a frame on another EMLMR link on which the STA1 103 is not currently receiving. This request may be referred to as rapid switch request information. The radio switch request information may include at least one of the following information: a link bitmap, MCS-NSS information to be used on an indicated link, and MCS-NSS information to be used on a current link. The link bitmap may indicate a link that the AP MLD1 intends to further use. For example, the AP MLD1 may indicate the second link. The MCS-NSS information to be used on an indicated link indicates MCS and NSS information that is supported on a link that the AP MLD1 indicates in the link bitmap. The STA MLD1 and the AP MLD1 perform communication according to the MCS-NSS information on a link that the AP MLD1 indicates in the link bitmap. The MCS-NSS information to be used on a current link indicates MCS and NSS information that is supported on a link on which the initial frame 500 is exchanged. The STA MLD1 and the AP MLD1 perform communication according to the MCS-NSS information on the link on which the initial frame 500 is exchanged. In another method, the STA MLD1 and the AP MLD1 may operate according to per-link spatial stream capability. The radio switch request information that the AP1 101 transmits to the STA1 103 may be transmitted by being included in an MAC header of a data frame in the form of A-Control. The radio switch request information may be assisted AP request+ (AAR+) information that is extended AAR information. In another method, the radio switch request information may be information that is configured in the form of A-Control or may be included in a frame transmitted by the AP 1 101 to the STA 1 103 in the form of an indication bit, a subfield, or an information element, or in any other forms.

After the AP1 101 of the AP MLD1 transmits the data frame 502 including the radio switch request information to the STA1 103, the AP2 105 may perform a channel access procedure on the second link. The radio switch request information is information requesting the STA MLD1 to receive a frame on the second link. The channel access procedure may be an EDCA backoff operation. The AP2 105 of the AP MLD1 may perform a channel access procedure (e.g., an EDCA backoff operation) and transmit a downlink frame 506 to the STA2 107 when a backoff counter reaches zero. Alternatively, even when the backoff counter reaches zero, if EMLMR Delay has not elapsed since the transmission end time of the data frame 502 including the radio switch request information of the AP1 101, the AP2 105 may not transmit the downlink data frame 506 but maintain the backoff counter at zero. When the EMLMR Delay has elapsed, the AP2 105 may transmit the downlink data frame 506 to the STA2 107. The EMLMR Delay is a time required for an STA MLD performing an EMLMR operation to switch a radio chain.

In another method, the transmission of the data frame 506 by the AP2 105 may be performed based on information included in the BA frame 504 that the STA1 103 transmits to the AP1 101. The STA1 103 may respond to the data frame 502 transmitted by the AP1 101 by using the BA frame 504. The BA frame 504 may further include information that approves or refuses the radio switch request transmitted from the AP1 101 to the STA 1 103. When the STA 1 103 approves the radio switch request transmitted from the AP1 101 in the BA frame 504, the AP MLD1 may perform a channel access procedure at the AP2 105 on the second link. The channel access procedure may be an EDCA backoff operation. The AP2 105 of the AP MLD1 may perform a channel access procedure (e.g., an EDCA backoff operation) and transmit a downlink frame 506 to the STA2 107 when a backoff counter reaches zero. Even when the backoff counter reaches zero, if EMLMR Delay has not elapsed since the transmission end time of the BA frame 504 of the STA1 103, the AP2 105 may not transmit the downlink data frame 506 but maintain the backoff counter at zero. When the EMLMR Delay has elapsed, the AP2 105 may transmit the downlink data frame 506 to the STA2 107. The EMLMR Delay is a time required for an STA MLD performing an EMLMR operation to switch a radio chain. On the first link, the AP1 101 and the STA1 103 may transmit and receive a frame using two spatial streams according to the radio switch request indicated by the AP1 101. On the second link, the AP2 105 and the STA2 107 may transmit and receive the frame 506 using two spatial streams according to the radio switch request indicated by the AP1 101.

Referring to FIG. 5B, when the EMLMR Delay time has elapsed after a duration of aSIFSTime + aSlotTime + aRxPHYStartDelay since the communication of the AP2 105 and the STA2 107 on the second link ends, the AP1 101 and the STA1 103 on the first link may perform a communication operation according to the spatiotemporal stream capability for the EMLMR operation that is exchanged through the EML OMN frame on the first link. For example, the AP1 101 and the STA1 103 may perform an operation of transmitting and receiving a frame using four spatial streams.

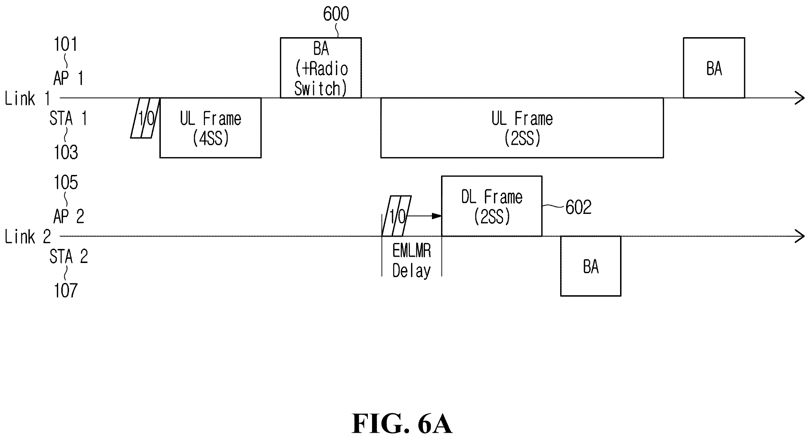

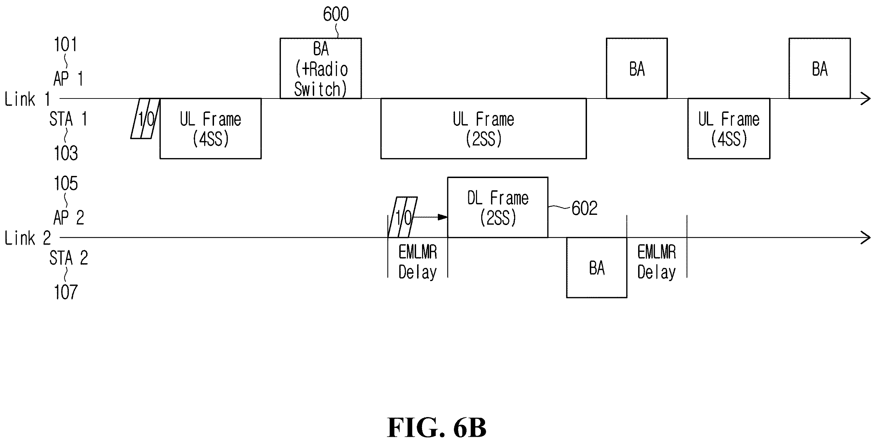

FIG. 6A and FIG. 6B are timing diagrams illustrating a seventh embodiment and an eighth embodiment of a WLAN EMLMR low-latency transmission method.

Referring to FIG. 6A and 6B, the AP1 101 and the STA1 103 may operate on a first link, and the AP2 105 and the STA2 107 may operate on a second link. The AP1 101 and the AP2 105 may be APs that are affiliated with an AP MLD1. The AP1 103 and the AP2 107 may be APs that are affiliated with an STA MLD1. That is, an AP and an STA that operate on the first link for the AP MLD1 and the STA MLD1 may be the AP1 101 and the STA1 103 respectively, and an AP and an STA that operate on the second link for the AP MLD1 and the STA MLD1 may be the AP2 105 and the STA2 107 respectively.

The STA MLD1 may be an MLD that supports an EMLMR operation. The STA MLD1 may operate the EMLMR operation on the first link and the second link. That is, the first link and the second link may be referred to as an EMLMR link. In the EMLMR operation, an STA MLD having multiple radios first receives an initial frame from an AP via a determined number of spatial streams (NSS) according to per-link spatial stream capabilities on each of multiple links and then switches receive chains and transmit chains to the link on which the initial frame is received. A receive chain and a transmit chain may be referred to as a radio chain. After receiving the initial frame, the STA MLD may communicate with an AP MLD via the switched radio chain using an NSS that is set during an EMLMR setup process. To perform the EMLMR operation, the STA MLD may transmit an enhanced multi-link operating mode notification (EML OMN) frame to the AP MLD. The EML OMN frame may include information on an MCS and an NSS that are to be used in the EMLMR operation. The EML OMN frame is an action frame that includes an EML control field. When frame reception is completed, the STA MLD may switch the radio chain to an EMLMR link on which the initial frame is not received. Until frame reception is completed, the STA MLD cannot receive data on the EMLMR link on which the initial frame is not received. Until frame transmission is completed, the AP MLD does not perform transmission on the EMLMR link on which the initial frame is not received. When the STA MLD performs the EMLMR operation on an EMLMR link and intends to transmit a frame to the AP MLD, an STA of the STA MLD may switch a radio chain and transmit the frame to an AP of the AP MLD using an MCS and an NSS that are to be used for the EMLMR operation. When the STA of the STA MLD completes the frame transmission, the STA MLD may operate on each of multiple links according to per-link spatial stream capabilities. When the STA of the STA MLD transmits a frame to the AP of the AP MLD, the AP MLD may transmit a frame to other STA then the STA that performs transmission for the STA MLD.

On the first link, the STA1 103 may perform a channel access procedure to transmit a frame to the AP1 101. The channel access procedure may be an EDCA backoff procedure. When the EDCA backoff procedure is successful, the STA1 103 obtains a TXOP that is a period during which multiple frames may be transmitted. That is, the STA1 103 is a TXOP holder. The STA1 103 may transmit a frame to the AP1 101. The STA MLD1 may use four spatial streams for transmission or reception in the EMLMR operation, and thus the STA1 103 may transmit a frame to the AP1 101 using four spatial streams. In other words, the spatial stream capability that is exchanged in an EML OMN frame and is used for the EMLMR operation may be NSS=4. The AP 1 101 may respond to the frame of the STA1 103 using a BlockAck (BA) frame 600. The AP1 101 may transmit a data frame to the STA1 103 using four spatial streams. The STA2 107 cannot perform frame transmission. The AP2 105 does not perform frame transmission to the STA2 107. While the AP MLD1 performs frame reception on the first link, data to be transmitted to the STA2 107 on the second link may arise. The data to be transmitted on the second link may be data that needs to be quickly transmitted. Accordingly, the AP1 101 of the AP MLD1 may indicate, in the BA frame 600 transmitted to the STA1 103, a request to receive a frame on another EMLMR link on which the STA1 103 is not currently transmitting and receiving. This request may be referred to as rapid switch request information. The radio switch request information may include at least one of the following information: a link bitmap, MCS-NSS information to be used on an indicated link, and MCS-NSS information to be used on a current link. The link bitmap may indicate a link that the AP MLD1 intends to further use. For example, the AP MLD1 may indicate the second link. The MCS-NSS information to be used on an indicated link indicates MCS and NSS information that is supported on a link that the AP MLD1 indicates in the link bitmap. The STA MLD1 and the AP MLD1 perform communication according to the MCS-NSS information on a link that the AP MLD1 indicates in the link bitmap. The MCS-NSS information to be used on a current link indicates MCS and NSS information that is supported on a link on which the initial frame is exchanged. The STA MLD1 and the AP MLD1 perform communication according to the MCS-NSS information on the link on which the initial frame is exchanged. In another method, the STA MLD1 and the AP MLD1 may operate according to per-link spatial stream capability. The radio switch request information that the AP1 101 transmits to the STA1 103 may be included in an MAC header of a QoS Null frame in the form of A-Control and may be transmitted in an A-MPDU form aggregated with a BA frame. The radio switch request information may be assisted AP request+ (AAR+) information that is extended AAR information. In another method, the radio switch request information may be information that is configured in the form of A-Control or may be included in a frame transmitted by the AP 1 101 to the STA 1 103 in the form of an indication bit, a subfield, or an information element, or in any other forms.

After the AP1 101 of the AP MLD1 transmits the BA frame 600 including the radio switch request information to the STA1 103, the AP2 105 may perform a channel access procedure on the second link. The radio switch request information is information requesting the STA MLD1 to receive a frame 602 on the second link. The channel access procedure may be an EDCA backoff operation. The AP2 105 of the AP MLD1 may perform a channel access procedure (e.g., an EDCA backoff operation) and transmit a downlink frame 602 to the STA2 107 when a backoff counter reaches zero. Alternatively, even when the backoff counter reaches zero, if EMLMR Delay has not elapsed since the transmission end time of the BA frame 600 including the radio switch request information of the AP1 101, the AP2 105 may not transmit the downlink data frame 602 but maintain the backoff counter at zero. When the EMLMR Delay has elapsed, the AP2 105 may transmit the downlink data frame 602 to the STA2 107. The EMLMR Delay is a time required for an STA MLD performing an EMLMR operation to switch a radio chain. On the first link, the AP1 101 and the STA1 103 may transmit and receive a frame using two spatial streams according to the radio switch request indicated by the AP1 101. On the second link, the AP2 105 and the STA2 107 may transmit and receive a frame using two spatial streams according to the radio switch request indicated by the AP1 101.

Referring to FIG. 6B, when the EMLMR Delay time has elapsed after a duration of aSIFSTime + aSlotTime + aRxPHYStartDelay since the communication of the AP2 105 and the STA2 107 on the second link ends, the AP1 101 and the STA1 103 on the first link may perform a communication operation according to the spatiotemporal stream capability for the EMLMR operation that is exchanged through the EML OMN frame on the first link. For example, the AP1 101 and the STA1 103 may perform an operation of transmitting and receiving a frame using four spatial streams.

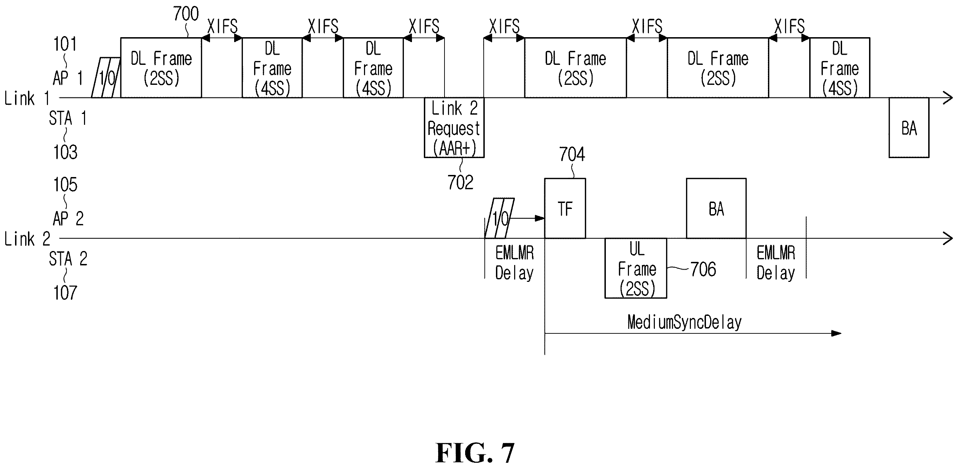

FIG. 7 is a timing diagram illustrating a ninth embodiment of a WLAN EMLMR low-latency transmission method.

Referring to FIG. 7, the AP1 101 and the STA1 103 may operate on a first link, and the AP2 105 and the STA2 107 may operate on a second link. The AP1 101 and the AP2 105 may be APs that are affiliated with an AP MLD1. The AP1 103 and the AP2 107 may be APs that are affiliated with an STA MLD1. That is, an AP and an STA that operate on the first link for the AP MLD1 and the STA MLD1 may be the AP1 101 and the STA1 103 respectively, and an AP and an STA that operate on the second link for the AP MLD1 and the STA MLD1 may be the AP2 105 and the STA2 107 respectively.

The STA MLD1 may be an MLD that supports an EMLMR operation. The STA MLD1 may operate the EMLMR operation on the first link and the second link. That is, the first link and the second link may be referred to as an EMLMR link. In the EMLMR operation, an STA MLD having multiple radios first receives an initial frame 700 from an AP via a determined number of spatial streams (NSS) according to per-link spatial stream capabilities on each of multiple links and then switches receive chains and transmit chains to the link on which the initial frame 700 is received. A receive chain and a transmit chain may be referred to as a radio chain. After receiving the initial frame 700, the STA MLD may communicate with an AP MLD via the switched radio chain using an NSS that is set during an EMLMR setup process. To perform the EMLMR operation, the STA MLD may transmit an enhanced multi-link operating mode notification (EML OMN) frame to the AP MLD. The EML OMN frame may include information on an MCS and an NSS that are to be used in the EMLMR operation. The EML OMN frame is an action frame that includes an EML control field. When frame reception is completed, the STA MLD may switch the radio chain to an EMLMR link on which the initial frame 700 is not received. Until frame reception is completed, the STA MLD cannot receive data on the EMLMR link on which the initial frame 700 is not received. Until frame transmission is completed, the AP MLD does not perform transmission on the EMLMR link on which the initial frame 700 is not received. When the STA MLD performs the EMLMR operation on an EMLMR link and intends to transmit a frame to the AP MLD, an STA of the STA MLD may switch a radio chain and transmit the frame to an AP of the AP MLD using an MCS and an NSS that are to be used for the EMLMR operation. When the STA of the STA MLD completes the frame transmission, the STA MLD may operate on each of multiple links according to per-link spatial stream capabilities. When the STA of the STA MLD transmits a frame to the AP of the AP MLD, the AP MLD may transmit a frame to other STA then the STA that performs transmission for the STA MLD.

On the first link, the AP1 101 may perform a channel access procedure to transmit a frame to the STA1 103. The channel access procedure may be an EDCA backoff procedure. When the EDCA backoff procedure is successful, the AP1 101 obtains a TXOP that is a period during which multiple frames may be transmitted. That is, the AP1 101 is a TXOP holder. The AP1 101 may transmit the initial frame 700 to the STA1 103. The per-link spatial stream capability of the STA1 103 may be NSS=2. Accordingly, the AP1 101 may transmit a frame to the STA1 103 using two spatial streams. The STA MLD1 may switch a radio chain to the first link after receiving the initial frame 700 of the AP1 101. The STA MLD1 may perform transmission and reception in the EMLMR operation through four spatial streams. In other words, the spatial stream capability that is exchanged in an EML OMN frame and is used for the EMLMR operation may be NSS=4. Accordingly, after the STA MLD1 switches the radio chain to the first link, the STA1 103 may transmit or receive a frame using four spatial streams. The AP1 101 may transmit a data frame to the STA1 103 using four spatial streams. The AP1 101 may consecutively transmit downlink frames to the STA1 103 at an interval of XIFS. The XIFS may be shorter than or equal to a SIFS. Alternatively, the XIFS may be a longer space (e.g., a PIFS) than the SIFS. During the XIFS between frames transmitted by the AP1 101, the STA1 103 may transmit a frame to the AP1 101. The STA2 107 cannot perform frame transmission. While the STA MLD1 receives the data frame on the first link, data for STA MLD1 to transmit on the second link may arise. The data to be transmitted on the second link may be data that needs to be quickly transmitted. Accordingly, the STA1 103 of the STA MLD1 may transmit a frame 702 including a request for transmitting and receiving a frame during the XIFS between frames transmitted to the AP1 101 on another EMLMR link on which reception is not currently performed. This request may be referred to as EMLMR rapid transmission request information and may be included in an MAC header of a QoS Null frame, a BA frame, or other frames transmitted by the STA1 103 to the AP1 101 in various forms. The EMLMR rapid transmission request information may include at least one of the following information: a link bitmap, trigger frame request information, MCS-NSS information to be used on an indicated link, MCS-NSS information to be used on a current link, and delay bound information. The link bitmap may indicate a link that the STA MLD1 intends to further use. For example, the STA MLD1 may indicate the second link. The trigger frame request information is information requesting that a trigger frame 704 is required on the link that STA MLD 1 indicates in the link bitmap. For example, since the STA MLD1 indicates the second link in the link bitmap, the AP2 105 of the AP MLD1 may transmit the trigger frame 704 to the STA2 107 of the STA MLD1 on the second link. The MCS-NSS information to be used on an indicated link indicates MCS and NSS information that is supported on a link that the STA MLD1 indicates in the link bitmap. The STA MLD1 and the AP MLD1 perform communication according to the MCS-NSS information on a link that the STA MLD1 indicates in the link bitmap. The MCS-NSS information to be used on a current link indicates MCS and NSS information that is supported on a link on which the initial frame 700 is exchanged. The STA MLD1 and the AP MLD1 perform communication according to the MCS-NSS information on the link on which the initial frame 700 is exchanged. In another method, the STA MLD1 and the AP MLD1 may operate according to per-link spatial stream capability. The delay bound information is information indicating by when the STA MLD1 must transmit data to the AP MLD1. For example, when an STA specifies the delay bound information as 1 ms, this indicates that the STA wishes to share an TXOP from an TXOP holder within 1 ms. The delay bound information may further include per AC or per TID time information. For example, the STA may indicate the delay bound information for each AC such as 1 ms for AC_VO and 5 ms for AC_BE. Alternatively, the STA may indicate the delay bound information for each TID such as 1 ms for TID 1 and 3 ms for TID 3. An indication of the delay bound information for each AC and an indication of the delay bound information for each TID may be used concurrently. According to delay bound information, the AP MLD1 may change a channel access parameter (e.g., an EDCA parameter) that is used to transmit the trigger frame 704 or a downlink frame 706 on a link that the STA MLD1 indicates in the link bitmap. The EMLMR rapid transmission request information that the STA1 103 transmits to the AP1 101 may be included in an MAC header of a QoS Null frame in the form of A-Control and may be transmitted in an A-MPDU form aggregated with a BA frame. The EMLMR rapid transmission request information may be assisted AP request+ (AAR+) information that is extended AAR information. In another method, the EMLMR rapid transmission request information may be information that is configured in the form of A-Control or may be included in a frame transmitted by the STA 1 103 to the AP 1 101 in the form of an indication bit, a subfield, or an information element, or in any other forms.

The ST1 103 may transmit an EMLMR rapid transmission request to the AP1 101, which may request transmission of the trigger frame 704 on the second link. After receiving the BA frame 702 including the EMLMR rapid transmission request information transmitted by the STA1 103, the AP1 101 of the AP MLD1 may include an indicator confirming the use of the second link in a downlink frame 706. The indicator confirming the use of the second link may indicate whether the STA2 107 and the AP2 105 can communicate on the second link. The indicator confirming the use of the second link may be configured in at least one form of an A-Control field, a subfield, an indication bit, and an information element. The AP2 105 of the AP MLD1 may perform a channel access procedure (e.g., an EDCA backoff operation) and transmit a trigger frame 704 to the STA2 107 when a backoff counter reaches zero. The channel access procedure of the AP2 105 may be performed more quickly based on the delay bound information of the EMLMR rapid transmission request information that the STA1 103 transmits to the AP1 101. Alternatively, even when the backoff counter reaches zero, if EMLMR Delay has not elapsed since the transmission end time of the BA frame 702 including the EMLMR rapid transmission request of the STA1 103, the AP2 105 may not transmit the trigger frame 704 but maintain the backoff counter at zero. When the EMLMR Delay has elapsed, the AP2 105 may transmit the trigger frame 704 to the STA2 107. Since the STA2 107 does not detect a channel for at least a predetermined time on the second link, the STA2 107 may set a MediumSyncDelay timer on the second link. The length of the MediumSyncDelay timer may be set to aPPDUMaxTime that is a preset greatest length of PPDU, and while the MediumSyncDelay timer operates, the STA2 107 needs to perform CCA. CCA is a channel detecting operation. When the STA2 107 receives the trigger frame 704 of the AP2 105, the MediumSyncDelay timer is initialized, and frame transmission and reception may be performed. The trigger frame 704 that the AP2 105 transmits to the STA2 107 may indicate the length of a resource according to the EMLMR rapid transmission request information that the STA1 103 transmits to the AP1 101. The STA2 107 may transmit a frame 706 requiring rapid transmission to the AP2 105. On the first link, the AP1 101 and the STA1 103 may transmit and receive a frame using two spatial streams according to the EMLMR rapid transmission request indicated by the STA1 103. On the second link, the AP2 105 and the STA2 107 may transmit and receive the frame 706 using two spatial streams according to the EMLMR rapid transmission request indicated by the STA1 103.

When the EMLMR Delay time has elapsed after a duration of aSIFSTime + aSlotTime + aRxPHYStartDelay since the communication of the AP2 105 and the STA2 107 on the second link ends, the AP1 101 and the STA1 103 on the first link may perform a communication operation according to the spatiotemporal stream capability for the EMLMR operation that is exchanged through the EML OMN frame on the first link. For example, the AP1 101 and the STA1 103 may perform an operation of transmitting and receiving a frame using four spatial streams.

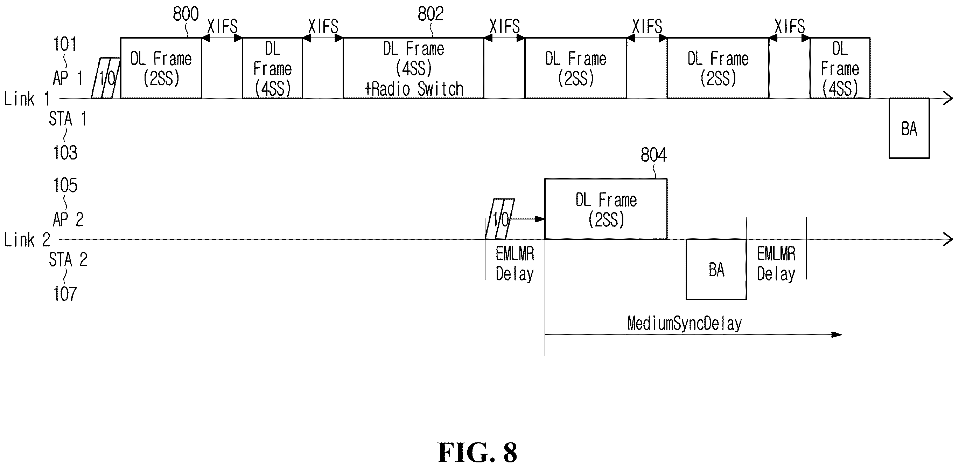

FIG. 8 is a timing diagram illustrating a tenth embodiment of a WLAN EMLMR low-latency transmission method.

Referring to FIG. 8, the AP1 101 and the STA1 103 may operate on a first link, and the AP2 105 and the STA2 107 may operate on a second link. The AP1 101 and the AP2 105 may be APs that are affiliated with an AP MLD1. The AP1 103 and the AP2 107 may be APs that are affiliated with an STA MLD1. That is, an AP and an STA that operate on the first link for the AP MLD1 and the STA MLD1 may be the AP1 101 and the STA1 103 respectively, and an AP and an STA that operate on the second link for the AP MLD1 and the STA MLD1 may be the AP2 105 and the STA2 107 respectively.

The STA MLD1 may be an MLD that supports an EMLMR operation. The STA MLD1 may operate the EMLMR operation on the first link and the second link. That is, the first link and the second link may be referred to as an EMLMR link. In the EMLMR operation, an STA MLD having multiple radios first receives an initial frame 800 from an AP via a determined number of spatial streams (NSS) according to per-link spatial stream capabilities on each of multiple links and then switches receive chains and transmit chains to the link on which the initial frame 800 is received. A receive chain and a transmit chain may be referred to as a radio chain. After receiving the initial frame 800, the STA MLD may communicate with an AP MLD via the switched radio chain using an NSS that is set during an EMLMR setup process. To perform the EMLMR operation, the STA MLD may transmit an enhanced multi-link operating mode notification (EML OMN) frame to the AP MLD. The EML OMN frame may include information on an MCS and an NSS that are to be used in the EMLMR operation. The EML OMN frame is an action frame that includes an EML control field. When frame reception is completed, the STA MLD may switch the radio chain to an EMLMR link on which the initial frame 800 is not received. Until frame reception is completed, the STA MLD cannot receive data on the EMLMR link on which the initial frame 800 is not received. Until frame transmission is completed, the AP MLD does not perform transmission on the EMLMR link on which the initial frame 800 is not received. When the STA MLD performs the EMLMR operation on an EMLMR link and intends to transmit a frame to the AP MLD, an STA of the STA MLD may switch a radio chain and transmit the frame to an AP of the AP MLD using an MCS and an NSS that are to be used for the EMLMR operation. When the STA of the STA MLD completes the frame transmission, the STA MLD may operate on each of multiple links according to per-link spatial stream capabilities. When the STA of the STA MLD transmits a frame to the AP of the AP MLD, the AP MLD may transmit a frame to other STA then the STA that performs transmission for the STA MLD.

On the first link, the AP1 101 may perform a channel access procedure to transmit a frame to the STA1 103. The channel access procedure may be an EDCA backoff procedure. When the EDCA backoff procedure is successful, the AP1 101 obtains a TXOP that is a period during which multiple frames may be transmitted. That is, the AP1 101 is a TXOP holder. The AP1 101 may transmit the initial frame 800 to the STA1 103. The per-link spatial stream capability of the STA1 103 may be NSS=2. Accordingly, the AP1 101 may transmit a frame to the STA1 103 using two spatial streams. The STA MLD1 may switch a radio chain to the first link after receiving the initial frame 800 of the AP1 101. The STA MLD1 may perform transmission and reception in the EMLMR operation through four spatial streams. In other words, the spatial stream capability that is exchanged in an EML OMN frame and is used for the EMLMR operation may be NSS=4. Accordingly, after the STA MLD1 switches the radio chain to the first link, the STA1 103 may transmit or receive a frame using four spatial streams. The AP1 101 may transmit a data frame to the STA1 103 using four spatial streams. The AP1 101 may consecutively transmit downlink frames to the STA1 103 at an interval of XIFS. The XIFS may be shorter than or equal to a SIFS. Alternatively, the XIFS may be a longer space (e.g., a PIFS) than the SIFS. During the XIFS between frames transmitted by the AP1 101, the STA1 103 may transmit a frame to the AP1 101. The STA2 107 cannot perform frame transmission. The AP2 105 does not perform frame transmission to the STA2 107. While the AP MLD1 performs frame transmission on the first link, data to be transmitted to the STA2 107 on the second link may arise. The data to be transmitted on the second link may be data that needs to be quickly transmitted. Accordingly, the AP1 101 of the AP MLD1 may indicate, in a data frame 802 transmitted to the STA1 103, a request to receive a frame on another EMLMR link on which the STA1 103 is not currently receiving. This request may be referred to as rapid switch request information. The radio switch request information may include at least one of the following information: a link bitmap, MCS-NSS information to be used on an indicated link, and MCS-NSS information to be used on a current link. The link bitmap may indicate a link that the AP MLD1 intends to further use. For example, the AP MLD1 may indicate the second link. The MCS-NSS information to be used on an indicated link indicates MCS and NSS information that is supported on a link that the AP MLD1 indicates in the link bitmap. The STA MLD1 and the AP MLD1 perform communication according to the MCS-NSS information on a link that the AP MLD1 indicates in the link bitmap. The MCS-NSS information to be used on a current link indicates MCS and NSS information that is supported on a link on which the initial frame 800 is exchanged. The STA MLD1 and the AP MLD1 perform communication according to the MCS-NSS information on the link on which the initial frame 800 is exchanged. In another method, the STA MLD1 and the AP MLD1 may operate according to per-link spatial stream capability. The radio switch request information that the AP1 101 transmits to the STA1 103 may be transmitted by being included in an MAC header of a data frame in the form of A-Control. The radio switch request information may be assisted AP request+ (AAR+) information that is extended AAR information. In another method, the radio switch request information may be information that is configured in the form of A-Control or may be included in a frame transmitted by the AP 1 101 to the STA 1 103 in the form of an indication bit, a subfield, or an information element, or in any other forms.

After the AP1 101 of the AP MLD1 transmits the data frame 802 including the radio switch request information to the STA1 103, the AP2 105 may perform a channel access procedure on the second link. The radio switch request information is information requesting the STA MLD1 to receive a frame on the second link. The channel access procedure may be an EDCA backoff operation. The AP2 105 of the AP MLD1 may perform a channel access procedure (e.g., an EDCA backoff operation) and transmit a downlink frame 804 to the STA2 107 when a backoff counter reaches zero. Alternatively, even when the backoff counter reaches zero, if EMLMR Delay has not elapsed since the transmission end time of the data frame 802 including the radio switch request information of the AP1 101, the AP2 105 may not transmit the downlink data frame 804 but maintain the backoff counter at zero. When the EMLMR Delay has elapsed, the AP2 105 may transmit the downlink data frame 804 to the STA2 107. The EMLMR Delay is a time required for an STA MLD performing an EMLMR operation to switch a radio chain. On the first link, the AP1 101 and the STA1 103 may transmit and receive a frame using two spatial streams according to the radio switch request indicated by the AP1 101. On the second link, the AP2 105 and the STA2 107 may transmit and receive a frame using two spatial streams according to the radio switch request indicated by the AP1 101.

When the EMLMR Delay time has elapsed after a duration of aSIFSTime + aSlotTime + aRxPHYStartDelay since the communication of the AP2 105 and the STA2 107 on the second link ends, the AP1 101 and the STA1 103 on the first link may perform a communication operation according to the spatiotemporal stream capability for the EMLMR operation that is exchanged through the EML OMN frame on the first link. For example, the AP1 101 and the STA1 103 may perform an operation of transmitting and receiving a frame using four spatial streams.

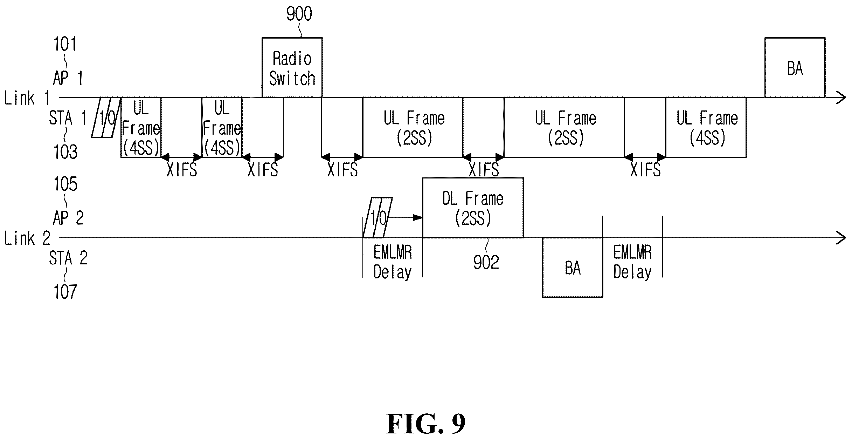

FIG. 9 is a timing diagram illustrating an eleventh embodiment of a WLAN EMLMR low-latency transmission method.

Referring to FIG. 9, the AP1 101 and the STA1 103 may operate on a first link, and the AP2 105 and the STA2 107 may operate on a second link. The AP1 101 and the AP2 105 may be APs that are affiliated with an AP MLD1. The AP1 103 and the AP2 107 may be APs that are affiliated with an STA MLD1. That is, an AP and an STA that operate on the first link for the AP MLD1 and the STA MLD1 may be the AP1 101 and the STA1 103 respectively, and an AP and an STA that operate on the second link for the AP MLD1 and the STA MLD1 may be the AP2 105 and the STA2 107 respectively.

The STA MLD1 may be an MLD that supports an EMLMR operation. The STA MLD1 may operate the EMLMR operation on the first link and the second link. That is, the first link and the second link may be referred to as an EMLMR link. In the EMLMR operation, an STA MLD having multiple radios first receives an initial frame from an AP via a determined number of spatial streams (NSS) according to per-link spatial stream capabilities on each of multiple links and then switches receive chains and transmit chains to the link on which the initial frame is received. A receive chain and a transmit chain may be referred to as a radio chain. After receiving the initial frame, the STA MLD may communicate with an AP MLD via the switched radio chain using an NSS that is set during an EMLMR setup process. To perform the EMLMR operation, the STA MLD may transmit an enhanced multi-link operating mode notification (EML OMN) frame to the AP MLD. The EML OMN frame may include information on an MCS and an NSS that are to be used in the EMLMR operation. The EML OMN frame is an action frame that includes an EML control field. When frame reception is completed, the STA MLD may switch the radio chain to an EMLMR link on which the initial frame is not received. Until frame reception is completed, the STA MLD cannot receive data on the EMLMR link on which the initial frame is not received. Until frame transmission is completed, the AP MLD does not perform transmission on the EMLMR link on which the initial frame is not received. When the STA MLD performs the EMLMR operation on an EMLMR link and intends to transmit a frame to the AP MLD, an STA of the STA MLD may switch a radio chain and transmit the frame to an AP of the AP MLD using an MCS and an NSS that are to be used for the EMLMR operation. When the STA of the STA MLD completes the frame transmission, the STA MLD may operate on each of multiple links according to per-link spatial stream capabilities. When the STA of the STA MLD transmits a frame to the AP of the AP MLD, the AP MLD may transmit a frame to other STA then the STA that performs transmission for the STA MLD.

On the first link, the STA1 103 may perform a channel access procedure to transmit a frame to the AP1 101. The channel access procedure may be an EDCA backoff procedure. When the EDCA backoff procedure is successful, the STA1 103 obtains a TXOP that is a period during which multiple frames may be transmitted. That is, the STA1 103 is a TXOP holder. The STA1 103 may transmit a frame to the AP1 101. The STA MLD1 may perform transmission or reception in the EMLMR operation using four spatial streams. In other words, the spatial stream capability that is exchanged in an EML OMN frame and is used for the EMLMR operation may be NSS=4. Accordingly, the STA1 103 may transmit a frame to the AP1 101 using four spatial streams. The AP1 101 may transmit a data frame to the STA1 103 using four spatial streams. The STA1 103 may consecutively transmit downlink frames to the AP1 101 at an interval of XIFS. The XIFS may be shorter than or equal to a SIFS. Alternatively, the XIFS may be a longer space (e.g., a PIFS) than the SIFS. During the XIFS between frames transmitted by the STA1 103, the AP1 101 may transmit a frame to the STA1 103. The STA2 107 cannot perform frame transmission. The AP2 105 does not perform frame transmission to the STA2 107. While the AP MLD1 performs frame reception on the first link, data to be transmitted to the STA2 107 on the second link may arise. The data to be transmitted on the second link may be data that needs to be quickly transmitted. Accordingly, the AP1 101 of the AP MLD1 may indicate, in a frame 900 transmitted to the STA1 103, a request to receive a frame on another EMLMR link on which the STA1 103 is not currently transmitting and receiving. This request may be referred to as rapid switch request information. The radio switch request information may include at least one of the following information: a link bitmap, MCS-NSS information to be used on an indicated link, and MCS-NSS information to be used on a current link. The link bitmap may indicate a link that the AP MLD1 intends to further use. For example, the AP MLD1 may indicate the second link. The MCS-NSS information to be used on an indicated link indicates MCS and NSS information that is supported on a link that the AP MLD1 indicates in the link bitmap. The STA MLD1 and the AP MLD1 perform communication according to the MCS-NSS information on a link that the AP MLD1 indicates in the link bitmap. The MCS-NSS information to be used on a current link indicates MCS and NSS information that is supported on a link on which the initial frame is exchanged. The STA MLD1 and the AP MLD1 perform communication according to the MCS-NSS information on the link on which the initial frame is exchanged. In another method, the STA MLD1 and the AP MLD1 may operate according to per-link spatial stream capability. The radio switch request information that the AP1 101 transmits to the STA1 103 may be included in an MAC header of a QoS Null frame in the form of A-Control and may be transmitted in an A-MPDU form aggregated with a BA frame. The radio switch request information may be assisted AP request+ (AAR+) information that is extended AAR information. In another method, the radio switch request information may be information that is configured in the form of A-Control or may be included in a frame transmitted by the AP 1 101 to the STA 1 103 in the form of an indication bit, a subfield, or an information element, or in any other forms.

After the AP1 101 of the AP MLD1 transmits the frame 900 including the radio switch request information to the STA1 103 during the XIFS between frames transmitted by the STA 1 103, the AP2 105 may perform a channel access procedure on the second link. The radio switch request information is information requesting the STA MLD1 to receive a frame on the second link. The channel access procedure may be an EDCA backoff operation. The AP2 105 of the AP MLD1 may perform a channel access procedure (e.g., an EDCA backoff operation) and transmit a downlink frame 902 to the STA2 107 when a backoff counter reaches zero. Even when the backoff counter reaches zero, if EMLMR Delay has not elapsed since the transmission end time of the frame 900 including the radio switch request information of the AP1 101, the AP2 105 may not transmit the downlink data frame 902 but maintain the backoff counter at zero. When the EMLMR Delay has elapsed, the AP2 105 may transmit the downlink data frame 902 to the STA2 107. The EMLMR Delay is a time required for an STA MLD performing an EMLMR operation to switch a radio chain. On the first link, the AP1 101 and the STA1 103 may transmit and receive a frame using two spatial streams according to the radio switch request indicated by the AP1 101. On the second link, the AP2 105 and the STA2 107 may transmit and receive a frame using two spatial streams according to the radio switch request indicated by the AP1 101.

When the EMLMR Delay time has elapsed after a duration of aSIFSTime + aSlotTime + aRxPHYStartDelay since the communication of the AP2 105 and the STA2 107 on the second link ends, the AP1 101 and the STA1 103 on the first link may perform a communication operation according to the spatiotemporal stream capability for the EMLMR operation that is exchanged through the EML OMN frame on the first link. For example, the AP1 101 and the STA1 103 may perform an operation of transmitting and receiving a frame using four spatial streams.

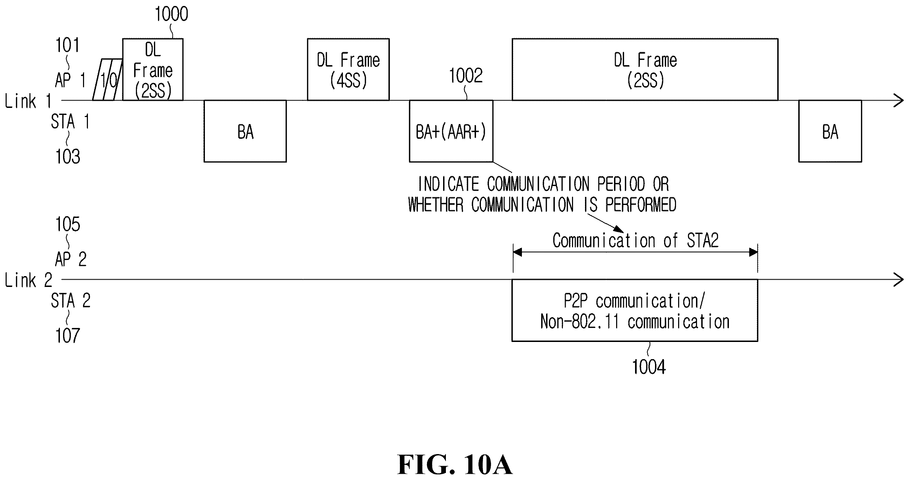

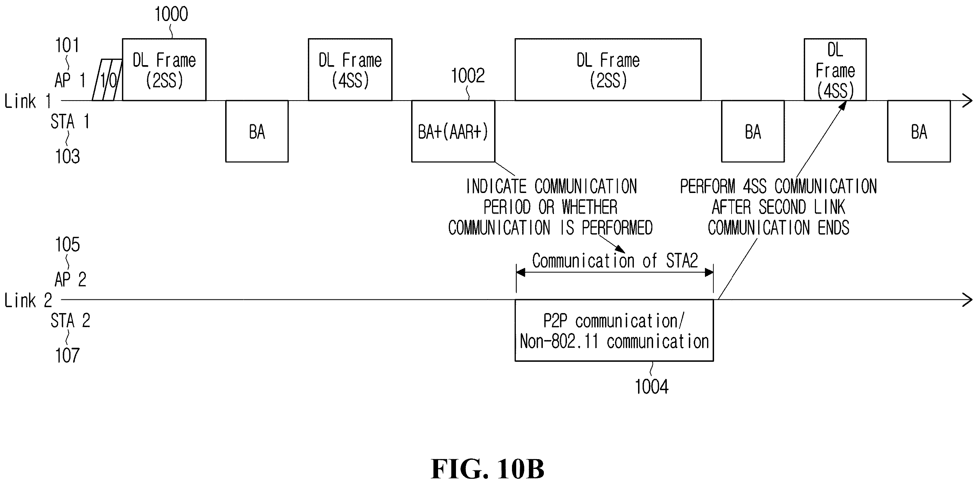

FIG. 10A and FIG. 10B are timing diagrams illustrating a twelfth embodiment and a thirteenth embodiment of a WLAN EMLMR low-latency transmission method.

Referring to FIG. 10A and 10B, the AP1 101 and the STA1 103 may operate on a first link, and the AP2 105 and the STA2 107 may operate on a second link. The AP1 101 and the AP2 105 may be APs that are affiliated with an AP MLD1. The AP1 103 and the AP2 107 may be APs that are affiliated with an STA MLD1. That is, an AP and an STA that operate on the first link for the AP MLD1 and the STA MLD1 may be the AP1 101 and the STA1 103 respectively, and an AP and an STA that operate on the second link for the AP MLD1 and the STA MLD1 may be the AP2 105 and the STA2 107 respectively.

The STA MLD1 may be an MLD that supports an EMLMR operation. The STA MLD1 may operate the EMLMR operation on the first link and the second link. That is, the first link and the second link may be referred to as an EMLMR link. In the EMLMR operation, an STA MLD having multiple radios first receives an initial frame 1000 from an AP via a determined number of spatial streams (NSS) according to per-link spatial stream capabilities on each of multiple links and then switches receive chains and transmit chains to the link on which the initial frame 1000 is received. A receive chain and a transmit chain may be referred to as a radio chain. After receiving the initial frame 1000, the STA MLD may communicate with an AP MLD via the switched radio chain using an NSS that is set during an EMLMR setup process. To perform the EMLMR operation, the STA MLD may transmit an enhanced multi-link operating mode notification (EML OMN) frame to the AP MLD. The EML OMN frame may include information on an MCS and an NSS that are to be used in the EMLMR operation. The EML OMN frame is an action frame that includes an EML control field. When frame reception is completed, the STA MLD may switch the radio chain to an EMLMR link on which the initial frame 1000 is not received. Until frame reception is completed, the STA MLD cannot receive data on the EMLMR link on which the initial frame 1000 is not received. Until frame transmission is completed, the AP MLD does not perform transmission on the EMLMR link on which the initial frame 1000 is not received. When the STA MLD performs the EMLMR operation on an EMLMR link and intends to transmit a frame to the AP MLD, an STA of the STA MLD may switch a radio chain and transmit the frame to an AP of the AP MLD using an MCS and an NSS that are to be used for the EMLMR operation. When the STA of the STA MLD completes the frame transmission, the STA MLD may operate on each of multiple links according to per-link spatial stream capabilities. When the STA of the STA MLD transmits a frame to the AP of the AP MLD, the AP MLD may transmit a frame to other STA then the STA that performs transmission for the STA MLD.

On the first link, the AP1 101 may perform a channel access procedure to transmit a frame to the STA1 103. The channel access procedure may be an EDCA backoff procedure. When the EDCA backoff procedure is successful, the AP1 101 obtains a TXOP that is a period during which multiple frames may be transmitted. That is, the AP1 101 is a TXOP holder. The AP1 101 may transmit the initial frame 1000 to the STA1 103. The per-link spatial stream capability of the STA1 103 may be NSS=2. Accordingly, the AP1 101 may transmit a frame to the STA1 103 using two spatial streams. The STA 1 103 may respond to the frame of the AP1 101 using a BlockAck (BA) frame. The STA MLD1 may switch a radio chain to the first link after receiving the initial frame 1000 of the AP1 101. The STA MLD1 may perform transmission and reception in the EMLMR operation through four spatial streams. In other words, the spatial stream capability that is exchanged in an EML OMN frame and is used for the EMLMR operation may be NSS=4. Accordingly, after the STA MLD1 switches the radio chain to the first link, the STA1 103 may transmit or receive a frame using four spatial streams. The AP1 101 may transmit a data frame to the STA1 103 using four spatial streams. The STA2 107 cannot perform frame transmission. While the STA MLD1 receives the data frame on the first link, data for STA MLD1 to transmit on the second link may arise. The data to be transmitted on the second link may not be data to be transmitted to the AP but may be data to be transmitted via direct communication (e.g., P2P communication). The data to be transmitted via P2P communication is not data that is transmitted to the AP MLD but data that is transmitted to another WLAN terminal. Alternatively, the data to be transmitted on the second link may not be transmitted via WLAN communication. That is, the data to be transmitted on the second link may be data that is transmitted using a non-802.11 protocol. Accordingly, the STA1 103 of the STA MLD1 may indicate, in a BA frame 1002 transmitted to AP1 101, a request to transmit and receive frames on another EMLMR link on which the STA MLD1 is not currently receiving. This request may be referred to as EMLMR rapid transmission request information. The EMLMR rapid transmission request information may be assisted AP request+ (AAR+) information that is extended AAR information. In another method, the EMLMR rapid transmission request information may be information that is configured in the form of A-Control or may be included in a frame transmitted by the STA 1 103 to the AP 1 101 in the form of an indication bit, a subfield, or an information element, or in any other forms. The EMLMR rapid transmission request information may include at least one of the following information: a link bitmap, MCS-NSS information to be used on a current link, trigger frame request information, a communication duration, and communication start and complete information. The link bitmap may indicate a link that the STA MLD1 intends to further use. For example, the STA MLD1 may indicate the second link. Since the STA MLD1 indicates the second link in the link bitmap, the STA MLD1 indicates that P2P communication or non-802.11 communication is performed on the second link. The MCS-NSS information to be used on a current link indicates MCS and NSS information that is supported on a link on which the initial frame 1000 is exchanged. The STA MLD1 and the AP MLD1 perform communication according to the MCS-NSS information on the link on which the initial frame 1000 is exchanged. In another method, the STA MLD1 and the AP MLD1 may operate according to per-link spatial stream capability. The communication duration indicates a duration for which communication is performed on a link indicated by the STA MLD in the link bitmap, and the communication start and complete information may indicate whether the STA MLD performs communication on the link indicated by the STA MLD in the bitmap.

The STA MLD1 and the AP MLD1 may perform communication on the first link using a smaller number of spatial streams (e.g., 2SS) than when EMLMR is set. The STA MLD1 may communicate with another STA or perform non-802.11 communication 1004 on the second link. The AP MLD2 does not perform communication for a communication duration indicated by the STA MLD1. In another method, a period during which the STA MLD1 perform communication on the second link may not be determined. Accordingly, the STA MLD1 may not indicate a specific communication duration but transmit EMLMR rapid transmission request information to the AP MLD1 at each time of the start and end of communication, thereby indicating a period during which the AP MLD1 is not allowed to perform transmission to the STA MLD1 on the second link. The start and end of communication may be indicated by communication start and complete information that is present in the EMLMR rapid transmission request information.

Referring to FIG. 10B, when the communication duration of the second link indicated by the STA MLD1 expires, the AP MLD1 and the STA MLD1 may perform communication on the first link using spatial streams (e.g., 4SS) that is set when EMLMR is set. In another method, when the STA MLD1 indicates the start of communication on the second link to the AP MLD1 through the communication start and complete information that is present in the EMLMR rapid transmission request information, communication may be performed using a smaller number of spatial streams (e.g., 2SS) than a number of spatial streams that is set when EMLMR is set. When the STA MLD1 indicates the end of communication on the second link to the AP MLD1 through the communication start and complete information that is present in the EMLMR rapid transmission request information, communication may be performed using the number of spatial streams (e.g., 4SS) that is set when EMLMR is set.

In FIG. 10A and FIG. 10B, when the STA MLD1 indicates trigger frame transmission on the second link to the AP MLD1 through trigger frame request information that is present in the EMLMR rapid transmission request information, the AP MLD1 may perform a TXOP sharing operation on the second link. The TXOP sharing operation may be a triggered TXOP sharing operation and may be performed through a MU-RTS TXS (TXOP sharing) frame of the AP MLD1. The MU-RTS TXS frame may include AID of the STA MLD1, and TXS Mode may be indicated as 2 or 1. The STA MLD1 may respond to the MU-RTS TXS frame by a CTS frame on the second link. When the TXS Mode is indicates as 2, the STA MLD 1 may perform P2P communication or communicate with an AP on the second link within a time indicated by the MU-RTS TXS frame. When the TXS Mode is indicates as 1, the STA MLD1 may communicate with an AP within a time indicated by the MU-RTS TXS frame on the second link.

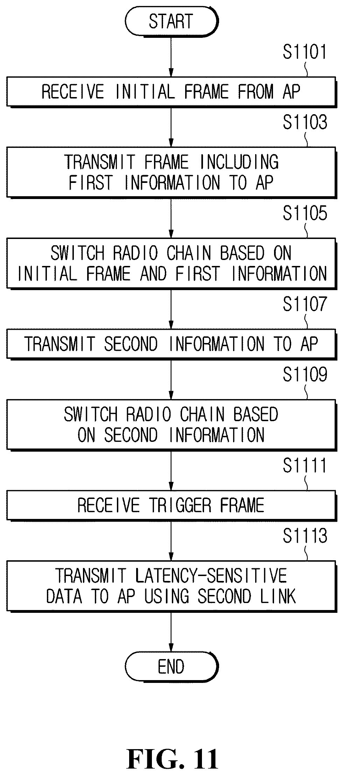

FIG. 11 illustrates a flowchart of a method of operating an STA according to an embodiment of the present disclosure. For example, the STA may be an MLD. In other words, the STA may transmit or receive a frame using a plurality of links including a first link and a second link. Here, the frame may include a control frame (e.g., a BA frame), an initial frame, and a data frame (e.g., a PPDU, an MPDU, or an A-MPDU). FIG. 11 illustrates an operation of the STA transmitting a data frame (e.g., a low-latency data) on the second link.

Referring to FIG. 11, in step S1101, the STA receives an initial frame (e.g., the initial frame 300 of FIG. 3A). The initial frame may be received using the first link. The initial frame may include at least one of information for switching a radio chain, information for starting an EMLMR operation, and information for configuring EMLMR. The initial frame is a frame transmitted by an AP and may be a frame that indicates the start of the EMLMR operation. The initial frame may be transmitted and received using a predefined NSS.

In step S1103, the STA transmits a frame including first information to the AP. The first information may be information associated with the EMLMR operation. For example, the first information may be information that includes at least one of an MCS and an NSS for the EMLMR operation. The frame including the first information may be, for example, an EML OMN frame.

In step S1105, the STA switches a radio chain based on the initial frame and the first information. In other words, the STA performs the EMLMR operation based on the initial frame and the first information. The radio chain includes a first chain and a second chain. Before performing the EMLMR operation, the STA may perform communication on the first link using the first chain. The STA may perform communication on the second link using the second chain. To perform transmission and reception on the first link, the STA may switch the radio chain from the second link to the first link. For example, the STA may switch the second chain from the second link to the first link. Here, the first link may be a link on which the initial frame is received. The second link may be a link on which the initial frame is not received. In other words, the NSS of a link on which the initial frame is not received (e.g., the second link) may be used on a link on which the initial frame is received (e.g., the first link). For example, when each link has two spatial streams, the STA may perform transmission and reception on the first link using 4 spatial streams.

After switching the radio chain, the STA may perform communication with the AP (e.g., the AP1 101 of FIG. 3A) using the first link. In other words, the STA may transmit a frame to the AP using the first link and receive a frame from the AP using the first link.

In step S1107, the STA may transmit second information. The second information may be information indicating the presence of data that is to be transmitted using the second link. In other words, the second information may be information indicating the presence of data that is to be transmitted on a link on which the EMLMR operation is not performed. For example, the data to be transmitted using the second link may be latency-sensitive data. The latency-sensitive data may be transmitted using a data frame. The second information may be transmitted using the first link. For example, the data frame transmitted on the first link (e.g., the BA frame 304 of FIG. 3A) may include the second information. The second information may include information for transmitting the data frame on the second link.

The second information may include at least one of a link bitmap, trigger frame request information, MCS information for an indicated link, NSS information for an indicated link, MCS information for a current link, NSS information for a current link, and delay bound information. The link bitmap indicates a link on which the data frame is to be transmitted. In other words, the link bitmap indicates one of links on which the initial frame is not received. According to an embodiment of the present disclosure, the link bitmap may indicate the second link. The trigger frame request information is information requesting a trigger frame (e.g., the trigger frame 306 of FIG. 3A) on a link indicated by the link bitmap. The indicated link is a link that the link bitmap indicates. The current link is a link on which the EMLMR operation is performed. In other words, the current link is a link (e.g., the first link) on which the initial frame is received. The delay bound information is information associated with time at which data or a frame is transmitted. The delay bound information may be information that is used to change a channel access parameter.

The second information may be expressed in various forms. For example, the second information may be in the form of A-Control and may be included in an MAC header of a QoS Null frame. As another example, the second information may be in the form of AAR+ that is extended AAR information. As still another example, the second information may be expressed as one of an indication bit, a subfield, and an information element.

In step S1109, the STA may switch the radio chain to the second link based on the second information. For example, the STA may switch the second chain to the second link based on the second information. The STA may receive information indicating the use of the second link (e.g., an indicator confirming the use of the second link) on the first link. The information indicating the use of the second link may be information included in a control frame or a data frame (e.g., the data frame 408 of FIG. 4A). For example, the STA may switch the radio chain from the first link to the second link based on at least one of the second information and the information indicating the use of the second link. As another example, the STA may transmit the second information to the AP and then switch the radio chain to the second link.

In step S1111, the STA may receive a trigger frame. The STA may switch the radio chain and then receive the trigger frame. The STA may receive the trigger frame using the second link.

The trigger frame may be a frame including information that indicates the size of a resource for transmitting a data frame. Here, the size of the resource may be a value that is determined based on the second information. For example, the trigger frame request information included in the second information may include information on the size of a resource that is required to transmit the data frame.

The STA may set a MediumSyncDelay time before receiving the trigger frame on the second link. The STA may initialize the MediumSyncDelay time after receiving the trigger frame on the second link. The STA may receive the trigger frame and then transmit and receive a frame on the second link.

In step S1113, the STA may transmit the data frame to the AP using the second link. For example, the STA may transmit the data frame using the NSS of the second link. As another example, the STA may transmit the data frame based on the second information. For example, the STA may transmit the data frame based on at least one of the MCS information for an indicated link and the NSS information for an indicated link. As still another example, the STA may transmit the data frame based on the trigger frame. The STA may transmit the data frame based on the size of a resource included in the trigger frame. In other words, the STA may transmit the data frame based on at least one of the second information and the trigger frame.

The data frame may be transmitted by being included in an uplink frame (e.g., the uplink frame 310 of FIG. 3A). The STA may transmit the data frame and then receive BA from the AP.

The STA may transmit the data frame and then transmit and receive a frame using a radio chain of the second link on the first link. In other words, the STA may perform the EMLMR operation on the first link. That is, the STA may switch the radio chain. On the other hand, the STA may not perform the EMLMR operation on the first link after transmitting the data frame.

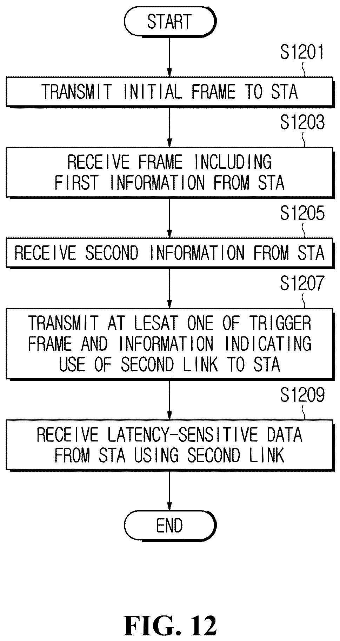

FIG. 12 illustrates a flowchart of a method of operating an AP according to an embodiment of the present disclosure. For example, the AP may be an MLD. In other words, the AP may transmit or receive a frame using a plurality of links including a first link and a second link. Here, the frame may include a control frame (e.g., a BA frame), an initial frame, and a data frame (e.g., a PPDU, an MPDU, or an A-MPDU). FIG. 12 illustrates an operation of the AP receiving a data frame (e.g., low-latency data).

Referring to FIG. 12, in step S1201, the AP transmits the initial frame (e.g., the initial frame 300 of FIG. 3A) to an STA. The initial frame may be received using the first link. The initial frame may include at least one of information for switching a radio chain, information for starting an EMLMR operation, and information for configuring EMLMR. The initial frame may be a frame that indicates the start of the EMLMR operation. The initial frame may be received using a predefined NSS.

In step S1203, the AP receives a frame including first information from the STA. The first information may be information associated with the EMLMR operation. For example, the first information may be information that includes at least one of an MCS and an NSS for the EMLMR operation. The frame including the first information may be, for example, an EML OMN frame.

In step S1205, the AP may receive second information from the STA. The second information may be information indicating the presence of data that is to be transmitted using the second link. In other words, the second information may be information indicating the presence of data that is to be transmitted on a link on which the EMLMR operation is not performed. For example, the data to be transmitted using the second link may be latency-sensitive data. The latency-sensitive data may be transmitted using a data frame. The second information may be information that is transmitted from the STA. For example, the AP may receive a control frame including the second information (e.g., the BA frame 304 of FIG. 3A). As another example, the AP may receive a data frame including the second information (e.g., a PPDU, an MPDU, or an A-MPDU). The second information may include information for transmitting the data frame on the second link.

The second information may include at least one of a link bitmap, trigger frame request information, MCS information for an indicated link, NSS information for an indicated link, MCS information for a current link, NSS information for a current link, and delay bound information. The link bitmap indicates a link on which the data frame is to be transmitted. In other words, the link bitmap indicates one of links on which the initial frame is not received. According to an embodiment of the present disclosure, the link bitmap may indicate the second link. The trigger frame request information is information requesting a trigger frame (e.g., the trigger frame 306 of FIG. 3A) on a link indicated by the link bitmap. The indicated link is a link that the link bitmap indicates. The current link is a link on which the EMLMR operation is performed. In other words, the current link is a link (e.g., the first link) on which the initial frame is received. The delay bound information is information associated with time at which data or a frame is transmitted. The delay bound information may be information that is used to change a channel access parameter.

The second information may be expressed in various forms. For example, the second information may be in the form of A-Control and may be included in an MAC header of a QoS Null frame. As another example, the second information may be in the form of AAR+ that is extended AAR information. As still another example, the second information may be expressed as one of an indication bit, a subfield, and an information element.

In step S1207, the AP may transmit at least one of the trigger frame and information indicating the use of the second link to the STA. The AP may transmit the trigger frame after obtaining the second information. The AP may transmit the information indicating the use of the second link (e.g., an indicator confirming the use of the second link) after transmitting the trigger frame or before transmitting the trigger frame. The AP may transmit the trigger frame using the second link. The AP may transmit the information indicating the use of the second link using the first link. The information indicating the use of the second link may be information included in a control frame or a data frame (e.g., the data frame 408 of FIG. 4A). The information indicating the use of the second link may be included in a different frame from the trigger frame.

The trigger frame may be a frame including information that indicates the size of a resource for transmitting a data frame. Here, the size of the resource may be a value that is determined based on the second information. For example, the trigger frame request information included in the second information may include information on the size of a resource that is required to transmit the data frame.

The AP may perform a backoff operation. For example, the AP may transmit the data frame to the STA when a backoff counter reaches zero. As another example, when the backoff counter reaches zero and a predefined time (e.g., EMLMR Delay) has elapsed since the transmission end time point of a frame including the second information, the AP may transmit the trigger frame to the STA. The backoff operation may be performed before the AP transmits the trigger frame. The backoff operation may start after the information indicating the use of the second link is transmitted.

In step S1209, the AP may receive the data frame from the STA using the second link. For example, the AP may receive the data frame using the NSS of the second link. As another example, the AP may receive the data frame based on the second information. For example, the AP may receive the data frame based on at least one of the MCS information for an indicated link and the NSS information for an indicated link. For example, the data frame may be received by being included in an uplink frame (e.g., the uplink frame 310 of FIG. 3A). The AP may receive the data frame and then transmit BA to the STA.

The AP may receive the data frame and then transmit and receive a frame using a radio chain of the second link on the first link. In other words, the AP may perform the EMLMR operation on the first link. On the other hand, the AP may not perform the EMLMR operation on the first link after transmitting the data frame.

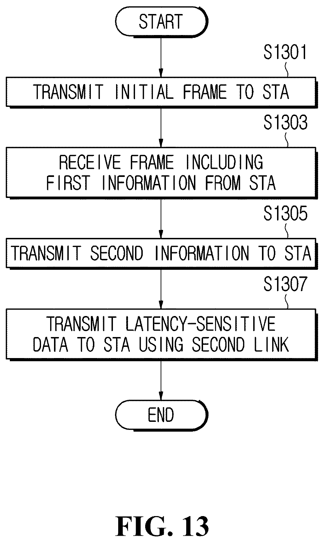

FIG. 13 illustrates a flowchart of a method of operating an AP according to an embodiment of the present disclosure. For example, the AP may be an MLD. In other words, the AP may transmit or receive a frame using a plurality of links including a first link and a second link. Here, the frame may include a control frame (e.g., a BA frame), an initial frame, and a data frame (e.g., a PPDU, an MPDU, or an A-MPDU). FIG. 13 illustrates an operation of the AP transmitting a data frame (e.g., low-latency data).

Referring to FIG. 13, in step S1301, the AP transmits the initial frame (e.g., the initial frame 500 of FIG. 5A) to an STA. The initial frame may be transmitted using the first link. The initial frame may include at least one of information for switching a radio chain, information for starting an EMLMR operation, and information for configuring EMLMR. The initial frame may be a frame that indicates the start of the EMLMR operation. The initial frame may be transmitted and received using a predefined NSS.

In step S1303, the AP receives a frame including first information from the STA. The first information may be information associated with the EMLMR operation. For example, the first information may be information that includes at least one of an MCS and an NSS for the EMLMR operation. The frame including the first information may be, for example, an EML OMN frame.

In step S1305, the AP may transmit second information to the STA. The second information may be information indicating the presence of data that is to be transmitted using the second link. In other words, the second information may be information indicating the presence of data that is to be transmitted on a link on which the EMLMR operation is not performed. For example, the data to be transmitted using the second link may be latency-sensitive data. The latency-sensitive data may be transmitted using a data frame. The second information may be transmitted by being included in a control frame or a data frame (e.g., the frame 502 of FIG. 5A). For example, the AP may transmit a control frame including the second information (e.g., a BA frame). As another example, the AP may transmit a data frame including the second information (e.g., a PPDU, an MPDU, or an A-MPDU). The second information may include information for transmitting the data frame on the second link.

The second information may include at least one of a link bitmap, trigger frame request information, MCS information for an indicated link, NSS information for an indicated link, MCS information for a current link, NSS information for a current link, and delay bound information. The link bitmap indicates a link on which the data frame is to be transmitted. In other words, the link bitmap indicates one of links on which the initial frame is not received. According to an embodiment of the present disclosure, the link bitmap may indicate the second link. The trigger frame request information is information that requests a trigger frame on a link indicated by the link bitmap. The indicated link is a link that the link bitmap indicates. The current link is a link on which the EMLMR operation is performed. In other words, the current link is a link (e.g., the first link) on which the initial frame is received. The delay bound information is information associated with time at which data or a frame is transmitted. The delay bound information may be information that is used to change a channel access parameter.

The second information may be expressed in various forms. For example, the second information may be in the form of A-Control and may be included in an MAC header of the data frame. As another example, the second information may be in the form of AAR+ that is extended AAR information. As still another example, the second information may be expressed as one of an indication bit, a subfield, and an information element.

According to an embodiment of the present disclosure, after transmitting the second information, the AP may receive information approving the use of the second link using the first link. The information approving the use of the second link may be information included in a control frame (e.g., the BA frame 504 of FIG. 5A) or a data frame. The information approving the use of the second link may be information that is transmitted as a response to the second information. In other words, the information approving the use of the second link may be information that the STA transmits in response to the second information. On the other hand, the AP may receive information refusing the use of the second link. When the AP receives the information refusing the use of the second link, step S1307 is not performed.

In step S1307, the AP may transmit the data frame to the STA using the second link. For example, the AP may transmit the data frame using the NSS of the second link. As another example, the AP may transmit the data frame based on the second information. For example, the AP may transmit the data frame based on at least one of the MCS information for an indicated link and the NSS information for an indicated link. For example, the data frame may be transmitted by being included in a downlink frame (e.g., the downlink frame 506 of FIG. 5A). The AP may transmit the data frame and then receive BA from the STA.

The AP may perform a backoff operation to transmit the data frame. For example, the AP may transmit the data frame to the STA when a backoff counter reaches zero. As another example, when the backoff counter reaches zero and a predefined time (e.g., EMLMR Delay) has elapsed since the transmission end time point of the data frame including the second information, the AP may transmit the data frame to the STA. The backoff operation may be performed before the AP transmits the data frame.

The AP may transmit the data frame and then transmit and receive a frame using a radio chain of the second link on the first link. In other words, the AP may perform the EMLMR operation on the first link. On the other hand, the AP may not perform the EMLMR operation on the first link after transmitting the data frame.

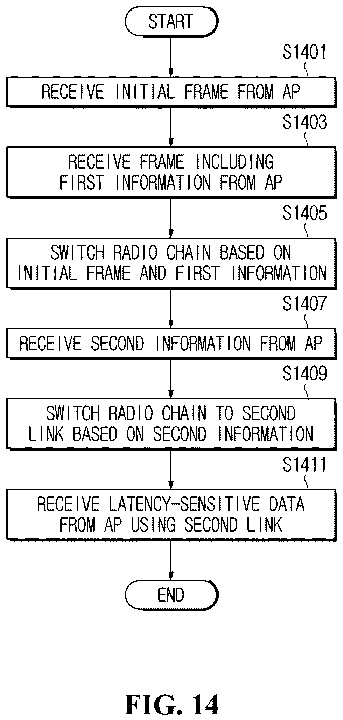

FIG. 14 illustrates a flowchart of a method of operating an STA according to an embodiment of the present disclosure. For example, the STA may be an MLD. In other words, the STA may transmit or receive a frame using a plurality of links including a first link and a second link. Here, the frame may include a control frame (e.g., a BA frame), an initial frame, and a data frame (e.g., a PPDU, an MPDU, or an A-MPDU). FIG. 14 illustrates an operation of the STA receiving a data frame (e.g., low-latency data).

Referring to FIG. 14, in step S1401, the STA receives an initial frame (e.g., the initial frame 500 of FIG. 5A) from an AP. The initial frame may be transmitted using the first link. The initial frame may include at least one of information for switching a radio chain, information for starting an EMLMR operation, and information for configuring EMLMR. The initial frame may be a frame that indicates the start of the EMLMR operation. The initial frame may be received using a predefined NSS.

In step S1403, the STA receives a frame including first information from the AP. The first information may be information associated with the EMLMR operation. For example, the first information may be information that includes at least one of an MCS and an NSS for the EMLMR operation. The frame including the first information may be, for example, an EML OMN frame.

In step S1405, the STA switches a radio chain based on the initial frame and the first information. In other words, the STA performs the EMLMR operation based on the initial frame and the first information. The radio chain includes a first chain and a second chain. Before performing the EMLMR operation, the STA may perform communication on the first link using the first chain. The STA may perform communication on the second link using the second chain. To perform transmission and reception on the first link, the STA may switch the radio chain from the second link to the first link. For example, the STA may switch the second chain from the second link to the first link. Here, the first link may be a link on which the initial frame is received. The second link may be a link on which the initial frame is not received. In other words, the NSS of a link on which the initial frame is not received (e.g., the second link) may be used on a link on which the initial frame is received (e.g., the first link). For example, when each link has two spatial streams, the STA may perform transmission and reception on the first link using 4 spatial streams.

In step S1407, the STA may receive second information from the AP. The second information may be information indicating the presence of data that is to be transmitted using the second link. In other words, the second information may be information indicating the presence of data that is to be transmitted on a link on which the EMLMR operation is not performed. For example, the data to be transmitted using the second link may be latency-sensitive data. The latency-sensitive data may be transmitted using a data frame. The second information may be transmitted by being included in a control frame or a data frame (e.g., the data frame 502 of FIG. 5A). For example, the STA may receive a control frame including the second information (e.g., a BA frame). As another example, the STA may receive a data frame including the second information (e.g., a PPDU, an MPDU, or an A-MPDU). The second information may include information for transmitting the data frame on the second link.

The second information may include at least one of a link bitmap, trigger frame request information, MCS information for an indicated link, NSS information for an indicated link, MCS information for a current link, NSS information for a current link, and delay bound information. The link bitmap indicates a link on which the data frame is to be transmitted. In other words, the link bitmap indicates one of links on which the initial frame is not received. According to an embodiment of the present disclosure, the link bitmap may indicate the second link. The trigger frame request information is information that requests a trigger frame on a link indicated by the link bitmap. The indicated link is a link that the link bitmap indicates. The current link is a link on which the EMLMR operation is performed. In other words, the current link is a link (e.g., the first link) on which the initial frame is received. The delay bound information is information associated with time at which data or a frame is transmitted. The delay bound information may be information that is used to change a channel access parameter. Information included in the second information may be expressed as a condition for transmitting a data frame using the second link. For example, when NSS included in NSS information for an indicated link is unavailable, the data frame may not be transmitted using the second link.

The second information may be expressed in various forms. For example, the second information may be in the form of A-Control and may be included in an MAC header of the data frame. As another example, the second information may be in the form of AAR+ that is extended AAR information. As still another example, the second information may be expressed as one of an indication bit, a subfield, and an information element.

According to an embodiment of the present disclosure, after receiving the second information, the STA may transmit information approving the use of the second link using the first link. The information approving the use of the second link may be information included in a control frame (e.g., the BA frame 504 of FIG. 5A) or a data frame. The information approving the use of the second link may be information that is transmitted as a response to the second information. In other words, the information approving the use of the second link may be information that the STA transmits in response to the second information. On the other hand, the STA may transmit information refusing the use of the second link. For example, when a condition for transmitting a data frame using the second link is not satisfied, the STA may transmit information refusing the used of the second link. When the STA transmits the information refusing the use of the second link, step S1409 is not performed.

In step S1409, the STA may switch the radio chain to the second link based on the second information. For example, the STA may switch the radio chain from the first link to the second link based on at least one of the second information and the information approving the use of the second link. As another example, the STA may receive the second information to the AP and then switch the radio chain to the second link. For example, the STA may switch the second chain to the second link.

In step S1411, the STA may receive the data frame from the AP using the second link. For example, the STA may receive the data frame using the NSS of the second link. As another example, the STA may receive the data frame based on the second information. For example, the STA may receive the data frame based on at least one of the MCS information for an indicated link and the NSS information for an indicated link. For example, the data frame may be received by being included in a downlink frame (e.g., the downlink frame 506 of FIG. 5A). The STA may receive the data frame and then transmit BA to the AP.

The STA may receive the data frame and then transmit and receive a frame using a radio chain of the second link on the first link. In other words, the STA may switch the radio chain to perform the EMLMR operation on the first link. On the other hand, the STA may not perform the EMLMR operation on the first link after transmitting the data frame.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

In addition, the computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

While the present disclosure has been described above with reference to preferred embodiments of the present disclosure, those skilled in the art will understand that various modifications and variations may be made to the present disclosure without departing from the scope and spirit of the present disclosure, which are defined by the Claims appended hereto.

## Claims

1. A method that is performed by a station (STA) in a wireless local area network (WLAN) system, the method comprising:
performing at least one of transmission and reception using a first chain on a first link;
performing at least one of transmission and reception using a second chain on a second link;
receiving an initial frame for starting an enhanced multi-link radio (EMLMR) operation on the first link;
switching the second chain from the second link to the first link based on the initial frame;
transmitting information for transmission of a data frame on the second link;
switching the second chain from the first link to the second link based on the information;
receiving a trigger frame on the second link; and
transmitting the data frame on the second link based on at least one of the information and the trigger frame.

2. The method of claim 1, wherein the information includes information on a modulation and coding scheme (MCS) and the number of spatial streams (NSS) for the second link and information requesting the trigger frame.

3. The method of claim 1, wherein the switching of the second chain from the first link to the second link comprises:
receiving information indicating use of the second link as a response to the information; and
switching the second chain based on the information and the information indicating the use of the second link.

4. The method of claim 3, wherein based on the second link being busy, the information indicating the use of the second link includes information refusing the use of the second link, and the second chain is not switched to the second link.

5. The method of claim 3, wherein the information includes a condition for transmitting the data frame using the second link, and
wherein based on the condition not being satisfied, the information indicating the use of the second link includes information refusing the use of the second link, and the second chain is not switched to the second link.

6. The method of claim 3, wherein the information indicating the use of the second link is information that is indicated using a PHY preamble.

7. The method of claim 6, wherein the PHY preamble includes information indicating an NSS of a downlink frame that is transmitted on the first link, and
the switching of the second chain from the first link to the second link further comprises:
decoding the preamble at a PHY layer to generate a primitive;
identifying the NSS at an MAC layer based on the primitive; and
obtaining the information indicating the use of the second link based on the NSS.

8. The method of claim 7, wherein the primitive includes RXVECTOR information.

9. A method that is performed by an access point (AP) in a wireless local area network (WLAN) system, the method comprising:
transmitting an initial frame for starting an enhanced multi-link multi radio (EMLMR) operation on a first link;
transmitting information for transmission of a data frame on a second link;
receiving information approving use of the second link; and
transmitting the data frame on the second link.

10. The method of claim 9, wherein the information includes information on a modulation and coding scheme (MCS) and the number of spatial streams (NSS) for the second link.

11. The method of claim 9, further comprising performing a channel access procedure on the second link.

12. The method of claim 11, wherein the channel access procedure includes an operation of counting an enhanced distributed channel access (EDCA) backoff, and
the data frame is transmitted based on a counter of the backoff being zero and after an lapse of EMLMR Delay since a transmission end time point of the first information.

13. The method of claim 11, wherein the channel access procedure includes an operation of counting an EDCA backoff, and
the data frame is transmitted based on a counter of the backoff being zero and after an lapse of EMLMR Delay since a transmission end time point of the information approving the use of the second link.

14. A method that is performed by an access point (AP) in a wireless local area network (WLAN) system, the method comprising:
transmitting an initial frame for starting an enhanced multi-link multi radio (EMLMR) operation on a first link;
receiving information for transmission of a data frame on a second link;
transmitting a trigger frame on the second link; and
receiving the data frame on the second link based on the information.

15. A method that is performed by a station (STA) in a wireless local area network (WLAN) system, the method comprising:
performing at least one of transmission and reception using a first chain on a first link;
performing at least one of transmission and reception using a second chain on a second link;
receiving an initial frame for starting an enhanced multi-link radio (EMLMR) operation on the first link;
switching the second chain of the second link to the first link based on the initial frame;
receiving information for transmission of a data frame on the second link;
switching the second chain from the first link to the second link based on the information;
transmitting information approving use of the second link; and
receiving latency-sensitive data on the second link based on the information.

16. A station (STA) in a wireless local area network (WLAN) system, the STA comprising:
a transceiver; and
a processor coupled to the transceiver,
wherein the processor is configured to:
perform at least one of transmission and reception using a first chain on a first link;
perform at least one of transmission and reception using a second chain on a second link;
receive an initial frame for starting an enhanced multi-link multi radio (EMLMR) operation on the first link;
switch the second chain (radio chain) to the first link based on the initial frame and the first information;
transmit information for transmission of a data frame on the second link;
switch the second chain from the first link to the second link based on the information;
receive a trigger frame on the second link; and
transmit the data frame on the second link based on at least one of the information and the trigger frame.

17. An access point (AP) in a wireless local area network (WLAN) system, the AP comprising:
a transceiver; and
a processor coupled to the transceiver,
wherein the processor is configured to:
transmit an initial frame for starting an enhanced multi-link multi radio (EMLMR) operation on a first link;
transmit information for transmission of a data frame on a second link;
receive information approving use of the second link; and
transmit the data frame on the second link.
